# EUROPEAN PATENT SPECIFICATION

(11) **EP 4 196 532 B1**
(45) Date of publication and mention of the grant of the patent: **18.09.2024**
(21) Application number: 21759289.8
(22) Date of filing: 11.08.2021
(51) Int. Cl.: C08L 83/04, C09J 183/04

(54) **SILICONE FORMULATION COMPRISING AN OXIME CROSSLINKER, CURED SILICONE FORMULATION AND USES THEREOF**
SILIKONFORMULIERUNG MIT EINEN OXIMVERNETZER, GEHÄRTETE SILIKONFORMULIERUNG UND VERWENDUNGEN DAVON
FORMULATION DE SILICONE COMPRENANT UN AGENT DE RÉTICULATION D'OXIME, FORMULATION DE SILICONE DURCIE ET LEURS UTILISATIONS

(30) Priority: 13.08.2020 EP 20190862
(43) Date of publication of application: 21.06.2023
(73) Proprietor: Soudal N.V., 2300 Turnhout (BE)
(72) Inventor: GEBOES, Peter, 2630 Aartselaar (BE); WOUTERS, Dominique, 2275 Gierle (BE); DE BACKER, Evelien, 2580 Putte (BE)
(74) Representative: Nederlandsch Octrooibureau
(86) International application number: PCT/EP2021/072390
(87) International publication number: WO 2022/034141

(56) References cited:
- US-A- 5 359 108
- US-A- 5 534 588
- US-B1- 6 413 354

## Description

### Field of the invention

The present invention relates to a silicone formulation comprising an oxime crosslinker, the corresponding cured silicone formulation, uses of the cured silicone formulation and uses of oxime crosslinkers in the area of silicone formulations. The present invention also relates to an oxime crosslinker.

### Background art

Room temperature vulcanizable compositions comprising a polydiorganosiloxane, also referred to as RTV silicones, are well known and used in various applications. The most prominent use is in the area of building and construction, where the RTV silicones are used as sealant, adhesive or coating. Such silicones typically comprise a polydiorganosiloxane having reactive hydroxyl end-groups as the base polymer in combination with a crosslinking agent and optional components such as catalysts, fillers, pigments, dyes, lubricants, plasticizers, adhesion promoters, thickening agents etc. Depending on the reactivity of the components and the desired shelf-life a RTV silicone may be formulated as a single component wherein all ingredients are blended, or as a multi-component formulation wherein different components comprise different (portions of) ingredients and need to be combined before use. The most commonly employed silicone formulations are single component (RTV1) or two-component (RTV2) formulations, which are typically moisture curable and employ a tri- or tetrafunctional silane (or its corresponding siloxane condensation product) as crosslinker.

The ready-to-use moisture-curable silicones are traditionally sold and used with the polydiorganosiloxane and the silane crosslinker pre-condensed in the form of a so-called "prepolymer" or "end-capped" polysiloxane. During production of these moisture-curable silicones, the terminal hydroxyl groups of the polydiorganosiloxane are reacted with the tri- or tetrafunctional silane (or its corresponding siloxane condensation product) crosslinker to form the so-called "prepolymer", which is then capable of curing by cross-linking under the influence of atmospheric moisture. This first reaction step is also referred to as "end-capping", i.e. the addition of a different end group on the reactive polydiorganosiloxane, and the product obtained may thus also be called an "end-capped polymer". Because this step leads to the formation of a "prepolymer", i.e. a compound suitable for further polymerisation, this reaction step is often also referred to as "prepolymerisation". This step prepares the reactive polymer for the subsequent polymerization reaction without itself being a polymerization reaction.

Next, after dispensing the end-capped polysiloxane from its container (e.g. upon application of the silicone to the desired substrate), moisture-curing takes place. The end-capped polymer has two (if the silane crosslinker was trifunctional) or three (if the silane crosslinker was tetrafunctional) remaining reactive groups. Without wishing to be bound by any theory it is believed that moisture from the environment, after application of the silicone paste, hydrolyses these remaining reactive groups into even more reactive silanol groups which in turn form crosslinks with other end-capped polymer chains. Because the cross-linking agent has brought to each end of the original polydiorganosiloxane two or three reactive groups, in this way a three dimensional, cross-linked final structure may be formed.

The commonly employed silane crosslinkers are acidic (e.g. ethyl-tris(acetoxy)silane) or neutrally crosslinking (e.g. methyl-tris(methylethylketoxime) silane) based on the leaving groups which are released during hydrolysis. Acidic crosslinkers are historically the most important group. However, in view of potential substrate deterioration caused by the acid released during crosslinking, suboptimal substrate adhesion, and the often intense and unpleasant odor, more and more systems based on neutral crosslinkers such as oxime silanes are presently being developed.

The most abundant and economically successful oxime silane crosslinker employs methyl ethyl ketoxime (MEKO). However, RTV silicones utilizing MEKO or similar oxime based silane crosslinkers have a number of shortcomings. For example, many known oxime crosslinkers are solid or highly viscous at room temperature or are prone to form solid particles resulting from crystallisation of the oxime leaving group, which complicates manufacturing of the silicone formulation. Importantly, some oxime crosslinker hydrolysis products, such as 2-butanone oxime (generated from MEKO-endcapped siloxane hydrolysis during curing) have been associated with a carcinogenic effect.

In order to be useful in practice, especially when used as a sealant or grouting compound, RTV silicone formulations not only need to have desirable physical properties post-cure but also need to be 'workable', for example by having an appropriate skinning time and exhibiting low or preferably no early cracking behaviour.

The skinning time of a silicone formulation is known as the time from application to the beginning of superficial solidification ('skin formation') and characterizes the time during which it is possible to manipulate the sealant after application (e.g. extrusion from a container). A sufficiently large skinning time is important as in practice a sealant is first applied in a joint and subsequently needs to be 'smoothened' using a detergent-dipped finger or a specific tool.

Early cracking behaviour is known as the (dis)ability of a sealant to withstand deformations in the early stage of sealant curing. Typically sealants with poor early cracking behaviour tend to tear in the joint when deformation of the joint occurs soon after application of the sealant. This can occur in practice in case of a temperature change in joints combining materials with high or different thermal expansion coefficients, or due to (human) manipulation of the joint shortly after application of the sealant, e.g. a person simply stepping in and out of a bathtub which is being sealed can already cause movement of the joint by several mm.

US5534588A discloses a room temperature vulcanizable silicone rubber composition which can be used as caulking material, adhesives, coatings and encapsulating materials amongst others. Example 1 discloses a silicone formulation comprising a silanol-terminated polydimethylsiloxane and phenyl substituted tris-functional ketoximino silane crosslinking agent.

US5359108A discloses silanes which are used as intermediates in one-component roomtemperature-curing sealant, adhesive and coating applications among other silicone polymer applications. Example 2 discloses a silicone formulation comprising a silanol-terminated polydimethylsiloxane and vinyl tris-(methyl amyl ketoximino) silane.

As will be shown in the appended examples, the present inventors have found that silicone formulations employing known oxime based silane crosslinkers exhibit short skinning time and/or a large early cracking window.

Hence, there exists a need for cross linking agents that can be used in a RTV silicone formulation, especially a sealant formulation, which overcome one or more problems of the prior art.

It is an object of the present invention to provide a silane crosslinker and/or a silicone formulation comprising the crosslinker which is characterized by an increased skinning time and/or reduced early cracking time, for example when compared to a known oxime based silane crosslinker.

It is a further object of the present invention to provide a silane crosslinker and/or a silicone formulation comprising the crosslinker which has a decreased release of carcinogenic compounds and preferably results in a decreased intensity and/or time of malodor upon curing, for example when compared to a known oxime based silane crosslinker.

### Summary of the invention

As is shown in the appended examples, the present inventors have surprisingly discovered that silicone formulations employing an oxime silane crosslinker comprising 5-methyl-3-heptanone oxime exhibit significantly improved early cracking behaviour and/or skin formation time compared to silicone formulations employing conventional oxime silane crosslinkers. Additionally, the 5-methyl-3-heptanone oxime released during moisture-curing of the silicone formulation has low volatility and may have reduced or no carcinogenic effects and/or malodor compared to known oxime silane crosslinkers such as MEKO silanes.

The present inventors have furthermore found that the improved early cracking behaviour and/or skin formation time may be obtained by employing said oximes as their tri- or tetrafunctional silanes tris(5-methyl-3-heptanoneoxime)silane or tetra(5-methyl-3-heptanoneoxime)silane as well as when employing 5-methyl-3-heptanoneoxime as free oxime in combination with any silane or siloxane crosslinker. Without wishing to be bound by any theory, the present inventors believe that the combination of 5-methyl-3-heptanoneoxime as free oxime with any silane or siloxane crosslinker results in the in-situ formation of a 5-methyl-3-heptanone oxime silane.

Accordingly, in a first aspect the invention provides a silicone formulation comprising a hydroxy-terminated polydiorganosiloxane and a first crosslinker selected from silanes according to formula (I) and hydrolysis or condensation products thereof: 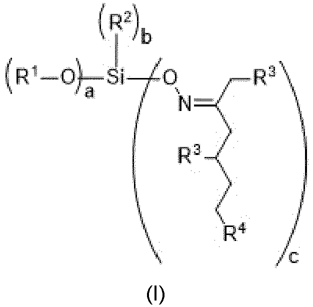 wherein:
a is 0, 1, 2 or 3;
b is 0 or 1;
c is 1, 2, 3 or 4;
a+b+c is 4;
each occurrence of R¹ and R² is individually selected from the group consisting of hydrogen and optionally substituted monovalent hydrocarbon radicals having from 1 to 30 carbon atoms; and
R³ and R⁴ are such that each occurrence of R³ is methyl and R⁴ is hydrogen.

As will be understood by the skilled person based on the present disclosure, the compound according to formula (I) is an oxime silane crosslinker comprising at least one 5-methyl-3-heptanone oxime moiety.

In another aspect the present invention provides an oxime silane or siloxane crosslinker selected from silanes according to formula (I) and hydrolysis or condensation products thereof: 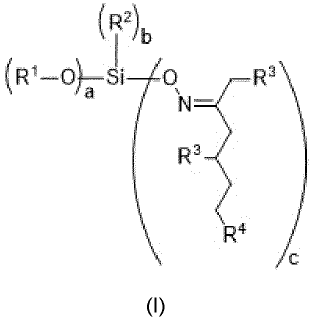 wherein:
a, b, c, R¹, R², R³ and R⁴ are as defined herein before.

In another aspect, there is provided a cured silicone elastomer obtainable by curing the silicone formulation as described herein, preferably obtainable by moisture-curing the silicone formulation as described herein.

In another aspect of the invention, there is provided the use of the silicone formulation provided herein, or the cured silicone elastomer provided herein, as a sealant, grouting compound or adhesive, preferably as a sealant.

In another aspect of the invention, various uses of a first crosslinker selected from silanes according to formula (I) and hydrolysis or condensation products thereof as described herein are provided.

In another aspect of the invention there are provided methods for the preparation of the silicone formulations as described herein comprising the steps of:
(i) providing at least one hydroxy-terminated polydiorganosiloxane as described herein;
(ii) providing:
   (ii.1) a first crosslinker selected from silanes according to formula (I) and hydrolysis or condensation products thereof as defined herein;
   (ii.2) optionally a second silane or siloxane crosslinker selected from silanes according to formula (II) as described herein and hydrolysis or condensation products thereof;
(iii) optionally providing further ingredients; and
(iv) combining the ingredients provided in steps (i), (ii) and optionally (iii).

### Detailed description

Reference is made to substances, components, or ingredients in existence at the time just before first contacted, blended, or mixed with one or more other substances, components, or ingredients in accordance with the present disclosure. A substance, component or ingredient may gain an identity, property, or character through a chemical reaction or transformation during the course of contacting, blending, or mixing if conducted in accordance with this disclosure with the application of common sense and the ordinary skills of an average chemist. Unless otherwise indicated herein, definitions of substances, components, or ingredients and their relative amounts concern the composition as it is prepared at the time of first contacting the ingredients, unless expressly indicated otherwise. For example, it is well known to the skilled person that contacting a hydroxy-terminated polydiorganosiloxane as described herein with a silane crosslinker as described herein may result in end-capping of the polydiorganosiloxane. As explained herein elsewhere, end-capping is typically performed on purpose by blending the polydiorganosiloxane with the crosslinker and optionally a catalyst before addition of the remaining ingredients. Any time the present disclosure references a composition or the preparation of a composition comprising a hydroxy-terminated polydiorganosiloxane, a crosslinker and optionally further ingredients, unless indicated otherwise this expressly includes compositions wherein the hydroxy-terminated polydiorganosiloxane has been end-capped with a crosslinker or with the crosslinker referenced in the composition.

In a first aspect, the invention provides a silicone formulation comprising a hydroxy-terminated polydiorganosiloxane and a first crosslinker selected from silanes according to formula (I) and hydrolysis or condensation products thereof: 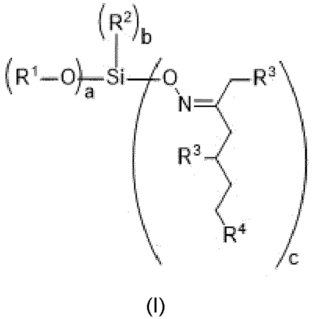 wherein:
a is 0, 1, 2 or 3;
b is 0 or 1;
c is 1, 2, 3 or 4;
a+b+c is 4;
each occurrence of R¹ and R² is individually selected from the group consisting of hydrogen and optionally substituted monovalent hydrocarbon radicals having from 1 to 30 carbon atoms; and
R³ and R⁴ are such that each occurrence of R³ is methyl and R⁴ is hydrogen.

In an embodiment, the silicone formulation as defined herein further comprises a catalyst, preferably an organometal catalyst which is present in an amount of 0.01-10 wt.% (by total weight of the silicone formulation).

### Crosslinker according to formula (1)

As explained herein before and as shown in the examples, the present inventors have found that silicone formulations employing a crosslinker selected from silanes according to formula (I) possess several particular and advantageous properties, such as a reduced or even no early cracking behaviour, increased skin formation time, reduced generation of hazardous (e.g. carcinogenic) compounds or odor during curing.

As is known to the skilled person, silane crosslinkers may be employed as such, or may be (partially) hydrolysed and/or condensed to form corresponding short-chain polysiloxanes. Such hydrolysis and/or condensation often already occurs to some extent due to interaction of the silane crosslinker with trace amounts of water before, during or after preparing the silicone formulation. Hence, it will be understood by the skilled person that the silane crosslinkers described herein may be provided as such or in the form of a hydrolysis or condensation product thereof. In highly preferred embodiments, the first crosslinker selected from silanes according to formula (I) and hydrolysis or condensation products thereof is selected from silanes according to formula (I).

In preferred embodiments according to the invention, the silicone formulation comprising a first crosslinker selected from silanes according to formula (I) and hydrolysis or condensation products thereof as described herein is provided wherein:
each occurrence of R¹ is individually selected from the group consisting of hydrogen, C₁-C₈ alkyl, C₁-C₈ haloalkyl, C₁-C₈ aminoalkyl, C₂-C₈ alkenyl, C₃-C₈ cycloalkyl, C₄-C₈ cycloalkenyl, C₆-C_{1O} aryl, -C(O)R⁵, -N=CR⁶R⁷ and -N=CR⁸;
R⁵, R⁶ and R⁷ are selected from the group consisting of C₁-C₈ alkyl, C₂-C₈ alkenyl, C₃-C₈ cycloalkyl, C₄-C₈ cycloalkenyl and C₆-C_{1O} aryl;
R⁸ is a bivalent C₂-C₈ alkyl radical such that -N=CR⁸ is a cycloalkyl; and
R² is selected from the group consisting of hydrogen, C₁-C₄ alkyl, C₂-C₄ alkenyl and phenyl.

In a particularly preferred embodiment according to the invention, the silicone formulation comprising a first crosslinker selected from silanes according to formula (I) and hydrolysis or condensation products thereof as described herein is provided wherein:
a is 0;
b is 0 or 1, preferably 1;
c is 3 or 4, preferably 3;
a+b+c is 4;
R² is selected from the group consisting of hydrogen, C₁-C₄ alkyl, C₂-C₄ alkenyl and phenyl, preferably R² is selected from the group consisting of hydrogen, methyl, ethyl, vinyl and phenyl, more preferably R² is methyl; and
R³ and R⁴ are such that each occurrence of R³ is methyl and R⁴ is hydrogen.

As will be understood by the skilled person based on the present disclosure, this embodiment corresponds to employing the oximes according to the invention as a trifunctional tris(5-methyl-3-heptanoneoxime)silane or as the tetrafunctional tetra(5-methyl-3-heptanoneoxime)silane. Furthermore, the inventors have found that using these oximes in the form of their trifunctional methyl silanes (i.e. R² is methyl) has the additional advantage that the skinning time is increased compared to the corresponding vinyl silanes (i.e. R² is vinyl) and that the cured silicones are not sticky. The latter is in particular an issue with the corresponding phenyl silanes (i.e. R² is phenyl) which remain sticky for a long time after curing.

In a highly preferred embodiment according the invention, the silicone formulation comprising a first crosslinker selected from silanes according to formula (I) and hydrolysis or condensation products thereof as described herein is provided wherein the first crosslinker selected from silanes according to formula (I) and hydrolysis or condensation products thereof is a tris(5-methyl-3-heptanoneoxime)silane, preferably a tris(5-methyl-3-heptanoneoxime)silane selected from the group consisting of methyl tris(5-methyl-3-heptanoneoxime)silane, vinyl tris(5-methyl-3-heptanoneoxime)silane and phenyl tris(5-methyl-3-heptanoneoxime)silane, most preferably methyl tris(5-methyl-3-heptanoneoxime)silane.

In a highly preferred embodiment according the invention, the silicone formulation comprising a first crosslinker selected from silanes according to formula (I) and hydrolysis or condensation products thereof as described herein is provided wherein the first crosslinker selected from silanes according to formula (I) and hydrolysis or condensation products thereof is tetra(5-methyl-3-heptanoneoxime)silane.

In a particularly preferred embodiment according to the invention, the silicone formulation comprising a first crosslinker selected from silanes according to formula (I) and hydrolysis or condensation products thereof as described herein is provided wherein:
a is 2 or 3;
b is 0 or 1;
c is 1 or 2;
a+b+c is 4;
each occurrence of R¹ is individually selected from the group consisting of C₁-C₄ alkyl, C₂-C₄ alkenyl, phenyl, -C(O)R⁵, -N=CR⁶R⁷ and -N=CR⁸;
R⁵, R⁶ and R⁷ are selected from the group consisting of C₁-C₈ alkyl, C₃-C₈ cycloalkyl and phenyl; R⁸ is a bivalent C₅ alkyl radical such that -N=CR⁸ is cyclohexyl;
R² is selected from the group consisting of hydrogen, C₁-C₄ alkyl, C₂-C₄ alkenyl and phenyl; and
R³ and R⁴ are such that each occurrence of R³ is methyl and R⁴ is hydrogen.

As will be understood by the skilled person based on the present disclosure, this embodiment corresponds to employing 5-methyl-3-heptanone as free oxime in combination with a silane or siloxane crosslinker. Without wishing to be bound by any theory, the present inventors believe that the combination of 5-methyl-3-heptanone as free oxime with a silane or siloxane crosslinker results in the in-situ formation of a 5-methyl-3-heptanone oxime silane or siloxane.

The present inventors have found that the combination of 5-methyl-3-heptanone as free oxime with an oxime silane or siloxane crosslinker is particularly advantageous. As is shown in the examples, the combination with 2-pentanonoxime silanes (also referred to as methylpropyl-ketoximosilanes) has been found to be most preferred, resulting in a silicone formulation which has a longer skinning time, improved early cracking properties, and improved mechanical properties (Elasticity modulus, elongation at break and/or shore A hardness). Hence in preferred embodiments according to the invention, the silicone formulation comprising a first crosslinker selected from silanes according to formula (I) and hydrolysis or condensation products thereof as described herein is provided wherein
a is 2 or 3;
b is 0 or 1;
c is 1 or 2;
a+b+c is 4;
R² is selected from the group consisting of hydrogen, C₁-C₄ alkyl, C₂-C₄ alkenyl and phenyl; and
R³ and R⁴ are such that each occurrence of R³ is methyl and R⁴ is hydrogen;
R¹ is -N=CR⁶R⁷; and
R⁶ and R⁷ are selected from the group consisting of C₁-C₈ alkyl, preferably R⁶ is methyl and R⁷ is propyl.

In preferred embodiments according to the invention, the silicone formulation comprising a first crosslinker selected from silanes according to formula (I) and hydrolysis or condensation products thereof as described herein is provided wherein the total amount of silanes according to formula (I) and hydrolysis or condensation products thereof is in the range of 0.1 to 15 wt.% (by total weight of the silicone formulation), preferably in the range of 0.5 to 10 wt.%, more preferably in the range of 1-6 wt.%.

In highly preferred embodiments according to the invention, the silicone formulation as described herein is provided wherein the hydroxy-terminated polydiorganosiloxane is at least partially end-capped with the first crosslinker.

### Second crosslinker

The silicone formulations according to the invention may comprise one or more additional crosslinking agents. In some embodiments of the invention, the silicone formulation comprising a first crosslinker selected from silanes according to formula (I) and hydrolysis or condensation products thereof described herein is provided further comprising a second silane or siloxane crosslinker.

In preferred embodiments of the invention, the silicone formulation comprising a first crosslinker selected from silanes according to formula (I) and hydrolysis or condensation products thereof described herein is provided further comprising a second silane or siloxane crosslinker selected from silanes according to formula (II) and hydrolysis or condensation products thereof: 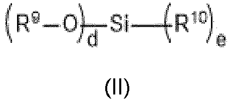 wherein
d is 3 or 4, preferably 3;
e is 1 or 0, preferably 1;
d+e is 4;
each occurrence of R⁹ is individually selected from the group consisting of hydrogen and optionally substituted monovalent hydrocarbon radicals having from 1 to 30 carbon atoms,
preferably each occurrence of R⁹ is individually selected from the group consisting of hydrogen, C₁-C₈ alkyl, C₁-C₈ haloalkyl, C₁-C₈ aminoalkyl, C₂-C₈ alkenyl, C₃-C₈ cycloalkyl, C₄-C₈ cycloalkenyl, C₆-C₁₀ aryl, -C(O)R¹¹, -N=CR¹²R¹³, and -N=CR¹⁴, more preferably each occurrence of R⁹ is individually selected from the group consisting of C₁-C₄ alkyl, C₂-C₄ alkenyl, phenyl, -C(O)R¹¹, -N=CR¹²R¹³ and -N=CR¹⁴, most preferably R⁹ is N=CR¹²R¹³;
R¹¹, R¹² and R¹³ are selected from the group consisting of C₁-C₈ alkyl, C₂-C₈ alkenyl, C₃-C₈ cycloalkyl, C₄-C₈ cycloalkenyl and C₆-C_{1O} aryl, preferably R¹¹, R¹² and R¹³ are selected from the group consisting of C₁-C₄ alkyl, most preferably R¹¹ and R¹² are methyl and R¹³ is propyl;
R¹⁴ is a bivalent C₂-C₈ alkyl radical such that -N=CR¹⁴ is a cycloalkyl; and
R¹⁰ is selected from the group consisting of hydrogen and optionally substituted monovalent hydrocarbon radicals having from 1 to 30 carbon atoms, preferably R¹⁰ is selected from the group consisting of hydrogen, methyl, ethyl, vinyl and phenyl, more preferably R¹⁰ is methyl.

As will be appreciated by those skilled in the art, the second silane or siloxane crosslinker selected from silanes according to formula (II) and hydrolysis or condensation products thereof is different from the first crosslinker selected from silanes according to formula (I) and hydrolysis or condensation products thereof.

As will be shown in the appended examples, the present inventors have found that the combination of a first crosslinker selected from silanes according to formula (I) and hydrolysis or condensation products thereof as described herein with a second silane or siloxane crosslinker selected from tris-(methylpropylketoximo)methylsilane, tris-(methylpropylketoximo)vinylsilane, and tris-(methylpropylketoximo)phenylsilane, in particular tris-(methylpropylketoximo)methylsilane is especially advantageous and allows the provision of a formulation having sufficiently long skinning time, little or no early cracking and good mechanical properties. Similar formulations employing conventional crosslinkers such as methyl tris(acetone oximo)silane or methyl tris(methyl ethyl ketoximo)silane as second silane or siloxane crosslinker were found to have inferior properties, in particular in relation to the skinning time and/or the mechanical properties and/or to require larger amounts of the first crosslinker to exhibit satisfactory properties.

In embodiments according to the invention, the silicone formulation comprising a first crosslinker selected from silanes according to formula (I) and hydrolysis or condensation products thereof described herein is provided further comprising a second silane or siloxane crosslinker selected from silanes according to formula (II) and hydrolysis or condensation products thereof wherein the silane according to formula (II) is selected from the group consisting of methyltrimethoxysilane, chloromethyltrimethoxysilane, ethyltrimethoxysilane, propyltrimethoxysilane, vinyltrimethoxysilane, methyltriethoxysilane, vinyltriethoxysilane, phenyltriethoxysilane, methyltripropoxysilane, phenyltripropoxysilane, tetramethoxysilane, tetraethoxysilane, tetra-n-propoxysilane, tetra-n-butoxysilane, 2-aminoethyl-3-aminopropyltrimethoxysilane, 2-aminoethyl-3-aminopropyltriethoxysilane, N-phenylaminomethyltrimethoxysilane, 3-glycidyloxypropyltrimethoxysilane, bis-(N-methylacetamido)methylethoxysilane, tris-(methylethylketoximo)methylsilane, tris-(methylethylketoximo)vinylsilane, tris-(methylethylketoximo)phenylsilane, tris-(methylpropylketoximo)methylsilane, tris-(methylpropylketoximo)vinylsilane, tris-(methylpropylketoximo)phenylsilane, N,N-bis-(triethoxysilylpropyl)amine, N,N-bis-(trimethoxysilylpropyl)amine, 1,2-bis-(triethoxysilyl) ethane and combinations thereof, preferably selecteed from the group consisting of tris-(methylpropylketoximo)methylsilane, tris-(methylpropylketoximo)vinylsilane, and tris-(methylpropylketoximo)phenylsilane, most preferably selected from the group consisting of tris-(methylpropylketoximo)methylsilane.

In highly preferred embodiments of the invention, the silicone formulation described herein is provided comprising a first crosslinker selected from silanes according to formula (I) as described herein and hydrolysis or condensation products thereof and a second silane or siloxane crosslinker according to formula (II) as described herein, wherein the weight ratio of the second crosslinker to the first crosslinker is in the range of 0.5 to 20, preferably in the range of 2 to 15, more preferably within the range of 6 to 12, most preferably within the range of 8 to 10.

In highly preferred embodiments of the invention, the silicone formulation described herein is provided comprising a first crosslinker selected from silanes according to formula (I) as described herein and hydrolysis or condensation products thereof and a second silane or siloxane crosslinker selected from silanes according to formula (II) as described herein and hydrolysis or condensation products thereof, wherein the weight ratio of the second crosslinker to the first crosslinker is in the range of 0.5 to 20, preferably in the range of 2 to 15, more preferably within the range of 6 to 12, most preferably within the range of 8 to 10; and wherein the total amount of silane or siloxane crosslinkers is within the range of 2-8 wt.% (by total weight of the silicone formulation), preferably within the range of 4-6 wt.%, most preferably within the range of 4.5-5.5 wt.%.

As will be understood by the skilled person based on the present disclosure, in case the first crosslinker selected from silanes according to formula (I) and hydrolysis or condensation products thereof is prepared in situ by combining 5-methyl-3-heptanone as free oxime in combination with a silane or siloxane crosslinker, the silicone formulation will inevitably comprise a second silane or siloxane crosslinker (i.e. the unreacted portion of the silane or siloxane crosslinker used to generate the silane according to formula (I)).

In highly preferred embodiments according to the invention, the silicone formulation described herein is provided comprising a first crosslinker selected from silanes according to formula (I) as described herein and hydrolysis or condensation products thereof and a second silane or siloxane crosslinker selected from silanes according to formula (II) as described herein and hydrolysis or condensation products thereof, wherein the hydroxy-terminated polydiorganosiloxane is at least partially end-capped with the first crosslinker and the second crosslinker. More preferably, substantially all terminal hydroxy groups of the polydiorganosiloxane have been end-capped with the first crosslinker or the second crosslinker.

### Silicone formulation obtainable by combining free oxime and silane crosslinker

As explained herein before, the present inventors have found that the improved early cracking behaviour and/or skin formation time may also be obtained by employing 5-methyl-3-heptanone as free oxime in combination with any silane or siloxane crosslinker. Without wishing to be bound by any theory, the present inventors believe that the combination of 5-methyl-3-heptanoneoxime as free oxime with any silane or siloxane crosslinker results in the in-situ formation of a 5-methyl-3-heptanone oxime bearing silane.

### Polydiorganosiloxane (base polymer)

According to the invention, the hydroxy-terminated polydiorganosiloxane included in the silicone formulations described herein may be any linear or branched polydiorganosiloxane conventionally used in silicone formulations and is not particularly limited.

In embodiments according to the invention, the hydroxy-terminated polydiorganosiloxane comprises repeating diorganosiloxane units having the structure [-SiR^{a}R^{b}-O-]ₙ wherein n is such that the dynamic viscosity at 25°C of the resulting polymer is in the range of 100 and 500000 mPa s and wherein R^{a} and R^{b} are independently selected from the group consisting of methyl, ethyl, propyl, butyl, phenyl, methylphenyl, ethylphenyl, vinyl, ally, cyclohexyl, tolyl, isopropyl chloropropyl, 3,3,3-trifluoropropyl, chlorophenyl, beta-(perfluorobutyl)ethyl and chlorocyclohexyl, preferably R^{a} and R^{b} are independently selected from the group consisting of methyl, ethyl, phenyl, vinyl or 3,3,3-trifluoropropyl, most preferably R^{a} and R^{b} are methyl.

In preferred embodiments of the invention, the hydroxy-terminated polydiorganosiloxane is a hydroxy-terminated polydialkylsiloxane, preferably hydroxy-terminated polydimethylsiloxane.

In preferred embodiments of the invention the hydroxy-terminated polydiorganosiloxane has a dynamic viscosity at 25°C of at least 200 mPa s, preferably at least 2000 mPa s, more preferably at least 10000 mPa·s.

In preferred embodiments of the invention the hydroxy-terminated polydiorganosiloxane has a dynamic viscosity at 25°C of less than 350000 mPa s, preferably less than 200000 mPa s, more preferably less than 130000 mPa s.

Hence, in highly preferred embodiments of the invention the hydroxy-terminated polydiorganosiloxane is a hydroxy-terminated polydialkylsiloxane, preferably a hydroxy-terminated polydimethylsiloxane, having a dynamic viscosity at 25°C within the range of 200-350000 mPa s, more preferably 2000-200000 mPa s, most preferably 10000-130000 mPa s.

The determination of the dynamic viscosity of polysiloxanes is known to the skilled person. A preferred method to determine the dynamic viscosity of the hydroxy-terminated polydiorganosiloxane is in accordance with DIN53019-1(2008).

In preferred embodiments of the invention the hydroxy-terminated polydiorganosiloxane as described herein is present in an amount of more than 10 wt.% (by total weight of the silicone formulation), preferably more than 20 wt.%, more preferably more than 30 wt.%.

In embodiments of the invention the total amount of any hydroxy-terminated polydiorganosiloxanes present in the formulation is within the range of 20-95 wt.% (by total weight of the silicone formulation), preferably 25-90 wt.%, more preferably 30-80 wt.%.

### Catalyst

According to the invention, the silicone formulations described herein may further comprise a catalyst. In a very preferred embodiment, the catalyst is an organometal catalyst which is present in an amount of 0.01-10 wt.% (by total weight of the silicone formulation). The catalyst may be any catalyst conventionally used in silicone formulations, such as organic bases, metal complexes, amines and/or carbenes and is not particularly limited.

Examples of suitable organic bases are guanidine or amidines, such as C₁-C₄ alkyl amidines.

Examples of suitable metal complexes, preferably organometal complexes, are metal complexes wherein the metal is selected from the group consisting of Al, Bi, Co, Fe, Ga, La, Mn, Pb, Pd, Pt, Rh, Sc, Sn, Sr, Ti, TI, Y, Zn, and Zr, more preferably wherein the metal is selected from the group consisting of Ti(IV), Sn(II), Sn(IV), Bi(III), Zn(ll) and Zr(IV). Suitable complexing groups include for example alkyl groups, such as C₁-C₂₀ alkyl groups, and carboxylates, such as C₂-C₂₀ carboxylates.

Examples of suitable amines include secondary amines and tertiary amines, such as diazabicyclo-undecenes.

Suitable catalysts are e.g. the catalysts which are available under the brand name TIB KAT^{®}, such as types 216, 217, 218, 219, 221, 223, 226, 229, 232, 233, 248, 318 and 417 from the company TIB Chemicals AG.

In preferred embodiments of the invention the silicone formulations described herein are provided further comprising a catalyst which is an organometal catalyst wherein the metal is selected from the group consisting of Al, Bi, Co, Fe, Ga, La, Mn, Pb, Pd, Pt, Rh, Sc, Sn, Sr, Ti, TI, Y, Zn, and Zr, more preferably comprising a catalyst which is an organotin compound, more preferably an organotin compound selected from the group consisting of dimethyltin di-2-ethylhexanoate, dimethyltin dilaurate, di-n-butyltin diacetate, di-n-butyltin di-2-ethylhexanoate, din-butyltin dicaprylate, di-n-butyltin di-2,2-dimethyloctanoate, di-n-butyltin dilaurate, di-n-butyltin distearate, di-n-butyltin dimaleate, di-n-butyltin dioleate, di-n-octyltin di-2-ethylhexanoate, di-n-octytin di-2,2-dimethyloctanoate, di-n-octyltin dimaleate, di-n-octyltin dilaurate, di-n-butyltin oxide, and di-n-octyltin oxide, most preferably di-n-octyltin oxide.

In preferred embodiments of the invention, the silicone formulations described herein are provided further comprising a catalyst as described herein, preferably an organometal catalyst as described herein wherein the catalyst is present in an amount of more than 0.01 wt.% (by total weight of the silicone formulation), preferably more than 0.05 wt.%, more preferably more than 0.1 wt.%.

In preferred embodiments of the invention, the silicone formulations described herein are provided further comprising a catalyst as described herein wherein the catalyst is present in an amount of less than 10 wt.% (by total weight of the silicone formulation), preferably less than 5 wt.%, more preferably less than 1 wt.%.

In preferred embodiments of the invention, the silicone formulations described herein are provided further comprising a catalyst as described herein wherein the catalyst is present in an amount within the range of 0.01-10 wt.% (by total weight of the silicone formulation), preferably within the range of 0.05-5 wt.%, more preferably within the range of 0.1-1 wt.%.

In accordance with the invention, the total combined amount of metal catalysts present is less than 10 wt.% (by total weight of the silicone formulation), preferably less than 5 wt.%.

### Filler

According to the invention, the silicone formulations described herein may further comprise a filler. The filler may be any filler conventionally used in silicone formulations and is not particularly limited. As used herein, the term filler is meant to encompass reinforcing fillers (e.g. fumed silica, precipitated calcium carbonate or carbon black) as well as non-reinforcing fillers (e.g. ground calcium carbonate). Fillers may also function as rheology modifiers and vice versa (e.g. fumed silica).

In accordance with preferred embodiments of the invention, the silicone formulations described herein are provided further comprising a filler which is also a thickening agent. A preferred filler which is also a thickening agent is silica, also called silicic acid. Silicic acid is a weak acid derived from silicon dioxide, SiOz, having as general formula SiO₂.nH₂O, whereby n may differ. Silicic acid is preferred because it bonds/interacts with the backbone of the polymer, bringing a significant enhancement of the physical and mechanical properties of the final product. The inventors have found that various forms of silica may be used as thickener, but fumed silica (also called "pyrogenic silica") is preferred because of its superior effect on mechanical properties of the final cured product (such as the tear strength). Suitable fillers which function as thickening agent are e.g. available as HDK^{®} V15, V15A, N20, H13L, H15, H18 from the company Wacker, as Cabosil^{®} L-90, LM-150, M-5, TS-610, TS-622 from the company Cabott, as Aerosil^{®} 130, 150, 200, R972, R974 from Evonik.

In preferred embodiments of the invention, the silicone formulations described herein are provided further comprising a filler selected from the group consisting of mineral fillers, metal oxide fillers, fly ash, bottom ash, carbon black, and combinations thereof, preferably selected from the group consisting of: chalk, calcium hydroxide; natural, ground or precipitated calcium carbonates; dolomites; fumed silica; carbon black; calcined kaolins; boehmite; clay; talc; aluminium silicates; magnesium aluminium silicates; zirconium silicates; finely ground quartz; finely ground cristobalite; diatomaceous earth; mica; iron oxides; titanium oxides; zirconium oxide and combinations thereof, more preferably selected from the group consisting of chalk, dolomite, fumed silica and combinations thereof.

The filler may be surface modified. Surface modification of fillers is known to the skilled person. Preferred surface modifications include surface treatment with a fatty acid (e.g. stearic acid) or a silane (e.g. an alkoxysilane). The filler may be a reinforcing filler which has a BET surface area of 90 to 300 m²/g, preferably 100 to 200 m²/g, more preferably 130 to 170 m²/g. The filler may be a non-reinforcing filler or semi-reinforcing filler, which has a BET surface area of 2 to 90 m²/g, preferably 2 to 50 m²/g, more preferably 2 to 10 m²/g.

In preferred embodiments of the invention the silicone formulations described herein are provided further comprising a filler as described herein wherein the filler is present in an amount of more than 1 wt.% (by total weight of the silicone formulation), preferably more than 3 wt.%, more preferably more than 5 wt.%.

In preferred embodiments of the invention the silicone formulations described herein are provided further comprising a filler as described herein wherein the filler is present in an amount of less than 60 wt.% (by total weight of the silicone formulation), preferably less than 50 wt.%, more preferably less than 30 wt.%.

In preferred embodiments of the invention the silicone formulations described herein are provided further comprising a filler as described herein wherein the filler is present in an amount within the range of 1-60 wt.% (by total weight of the silicone formulation), preferably within the range of 3-50 wt.%, more preferably within the range of 5-30 wt.%.

In other preferred embodiments of the invention, the silicone formulations described herein further comprise 1-60 wt.% (by total weight of the silicone formulation), preferably within the range of 3-50 wt.%, more preferably within the range of 5-30 wt.% of a filler selected from the group consisting of mineral fillers, metal oxide fillers, fly ash, bottom ash, carbon black, and combinations thereof, preferably selected from the group consisting of: calcium hydroxide; natural, ground or precipitated calcium carbonates; dolomites; fumed silica; carbon black; calcined kaolins; boehmite; clay; talc aluminium silicates; magnesium aluminium silicates; zirconium silicates; finely ground quartz; finely ground cristobalite; diatomaceous earth; mica; iron oxides; titanium oxides; zirconium oxide, more preferably selected from the group consisting of dolomite and fumed silica.

In accordance with the invention, the total combined amount of fillers present is less than 60 wt.% (by total weight of the silicone formulation), preferably less than 50 wt.%.

### Adhesion promotor

According to the invention, the silicone formulations described herein may further comprise an adhesion promotor. The adhesion promotor may be any adhesion promotor conventionally used in silicone formulations and is not particularly limited.

In preferred embodiments of the invention, the silicone formulations described herein are provided further comprising an organosilane adhesion promotor selected from the group consisting of aminosilanes, alkoxysilanes and epoxysilanes, preferably selected from the group consisting of aminoalkyltrialkoxysilanes, aminoalkylalkyldialkoxysilanes, bis(alkyltrialkoxysilyl)amines, tris(alkyltrialkoxysilyl)amines, tris(alkyltrialkoxysilyl)cyanuarates, tris (alkyl-trialkoxy-silyl)isocyanuarates, alkoxy terminated polydimethylsiloxanes comprising aminoalkyl sidegroups (such as ethoxy terminated (3-aminopropyl)(methyl)polysiloxane)), hydroxy-terminated polydimethylsiloxane end-capped with N-(3-trimethoxysilyl) propyl cyclohexane amine, condensation products of any of the recited silanes, and combinations thereof. Preferably the alkyl group is a C₁-C₄ alkyl and the alkoxy group is a C₁-C₄ alkoxy.

In highly preferred embodiments of the invention, the silicone formulations described herein are provided further comprising an adhesion promotor which is selected from the group consisting of 3-aminopropyl triethoxy silane, 3-aminopropyl trimethoxy silane, N-(2-aminoethyl)-3-aminopropyl trimethoxy silane, 3-(2-amino¬ethylamino)propyl triacetoxy silane, N-(3-trimethoxysilylpropyl) diethylene-triamine, bis-(3-methoxysilylpropyl)-amine, amino ethylaminopropyl methyl dimethoxy silane, N-(2-aminoethyl)-3-aminopropyl dimethoxy methyl silane, N-(n-butyl)-3-aminopropyl trimethoxy silane, N-(n-butyl)-3-aminopropyl trimethoxy silane, 3-aminopropyl methyl diethoxy silane, amino ethyl amino trimethoxy silane, 3-glycidoxypropyl trimethoxy silane, 3-glycidoxypropyl triethoxy silane, gamma-ureidopropyl trimethoxy-silane, 3-aminopropyl (methyl) silsesquioxanes and combinations thereof.

Suitable adhesion promoters may e.g. be found in the families of products that are offered as Geniosil^{®} from the company Wacker, as Silquest^{®} from Momentive Performance Materials, and as Dynasylan^{®} from Evonik.

In preferred embodiments of the invention, the silicone formulations described herein are provided further comprising an adhesion promotor as described herein wherein the adhesion promotor is present in an amount of more than 0.01 wt.% (by total weight of the silicone formulation), preferably more than 0.05 wt.%, more preferably more than 0.1 wt.%.

In preferred embodiments of the invention, the silicone formulations described herein are provided further comprising an adhesion promotor as described herein wherein the adhesion promotor is present in an amount of less than 10 wt.% (by total weight of the silicone formulation), preferably less than 5 wt.%, more preferably less than 3 wt.%.

In preferred embodiments of the invention, the silicone formulations described herein are provided further comprising an adhesion promotor as described herein wherein the adhesion promotor is present in an amount within the range of 0.01-10 wt.% (by total weight of the silicone formulation), preferably within the range of 0.05-5 wt.%, more preferably within the range of 0.1-2 wt.%.

In accordance with the invention, the total combined amount of adhesion promotors present is less than 15 wt.% (by total weight of the silicone formulation), preferably less than 10 wt.%.

### Plasticizer

According to the invention, the silicone formulations described herein may further comprise a plasticiser. The plasticiser may be any plasticiser conventionally used in silicone formulations and is not particularly limited. Preferred plasticizers are silicon oils, which may be partially or completely replaced by C₁₀-C₃₀ hydrocarbons.

Hence, in preferred embodiments of the invention, the silicone formulations described herein are provided further comprising a plasticizer which is a linear or branched polydialkylsiloxane which contains two or less hydrolyzable Si-O bonds, preferably a plasticizer which is a trialkylsilyl-terminated polydialkylsiloxane, preferably a trimethylsilyl-terminated polydimethylsiloxane. Said linear or branched polydialkylsiloxane preferably has a dynamic viscosity at 25°C in the range of 1-10000 mPa s, preferably a viscosity in the range of 10-12500 mPa·s.

In preferred embodiments of the invention, the silicone formulations described herein are provided further comprising a hydrocarbon plasticizer consisting of one or more C₁₀-C₃₀ hydrocarbons, preferably consisting of one or more C₁₀-C₂₀ hydrocarbons. Preferably said hydrocarbon plasticizer comprses <10wt.% (by total weight of hydrocarbon plasticizer) aromatics, preferably less than 3 wt.% aromatics.

Such products are, for example, offered as Exxsol^{®} D60, D80, D100, D120, or D140, or as Isopar^{®} H, J, K, L, M, N, or V from the company ExxonMobil Chemical, or Ketrul^{®} D100, Hydroseal^{®} G232H, G240H, G3H , G250H, G270H, G400H, G310H, G315H, G340H from the company Total, or Shellsol^{®} D60, D80, D100 from the company Shell, Pilot^{®} 261, 291, 321, 400, 600, 900 from the company Petrochem Carless, or Nyflex^{®} 8120, 8131, 800 from the company Nynas.

In embodiments of the invention, the silicone formulations described herein are provided further comprising a plasticizer which is an alkyl endcapped poly(alkylene)glycol, preferably C₁-C₄ endcapped polyethylene or polypropylene glycol.

In preferred embodiments of the invention, the silicone formulations described herein are provided further comprising a plasticizer as described herein wherein the plasticizer is present in an amount of more than 1 wt.% (by total weight of the silicone formulation), preferably more than 3 wt.%, more preferably more than 5 wt.%.

In preferred embodiments of the invention, the silicone formulations described herein are provided further comprising a plasticizer as described herein wherein the plasticizer is present in an amount of less than 40 wt.% (by total weight of the silicone formulation), preferably less than 35 wt.%, more preferably less than 30 wt.%.

In preferred embodiments of the invention, the silicone formulations described herein are provided further comprising a plasticizer as described herein wherein the plasticizer is present in an amount within the range of 1-60 wt.% (by total weight of the silicone formulation), preferably within the range of 10-50 wt.%, more preferably within the range of 20-35 wt.% by total weight of the silicone formulation.

In accordance with the invention, the total combined amount of plasticizers present is less than 50 wt.% (by total weight of the silicone formulation), preferably less than 35 wt.%.

### Miscellaneous

As will be understood by the skilled person, the silicone formulations described herein may comprise further ingredients (such as biocides, pigments, etc.) and the combined amount of all ingredients employed in the silicone formulations is 100 wt.% (by total weight of the silicone formulation).

In preferred embodiments according to the invention the silicone formulations described herein are provided wherein the total combined amount of any silane or siloxane crosslinker present is in the range of 0.1 to 15 wt.% (by total weight of the silicone formulation), preferably in the range of 0.5 to 10 wt.%, more preferably in the range of 1-6 wt.%.

In highly preferred embodiments according to the invention, the formulations provided herein are room temperature (e.g. 23°C) vulcanizable, preferably under the influence of moisture and thus moisture-curable. In even more preferred embodiments according to the invention, the formulations provided herein are moisture-curable, one component room temperature vulcanizable (RTV1) silicone sealant formulations.

As will be appreciated by the skilled person, the silicone formulations described herein may be provided as one or multi-component (e.g. two-component) systems. The silicone formulations described herein are preferably one component systems.

In the event that the silicone formulations described herein are provided as a multi-component system, it is to be understood that the relative amounts of the ingredients as defined throughout the present disclosure are calculated based on the total formulation as if the different components were combined.

The present inventors have found that while silane or siloxane crosslinkers comprising at least one vinyl group (e.g. tris(alkoxy)vinylsilane or tris(alkoxime)vinylsilane) may be employed to improve the early cracking behaviour of known oxime silane or siloxane crosslinkers, the silicone formulation of the present invention require less or even no silane or siloxane crosslinkers comprising at least one vinyl group in order to be free of early cracking. The compositions of the present invention thus not only increase skinning time, improve early cracking behaviour and improve one or more mechanical properties as explained herein elsewhere, they also allow a reduced amount of silane or siloxane crosslinkers comprising at least one vinyl group to be used, resulting additional advantages, such as a cost reduction, and reduced or no gelling during end-capping (which is a typical issue with vinyl silanes). Hence, in preferred embodiments of the invention, the silicone formulations described herein are provided comprising less than 4 wt.% silane or siloxane crosslinkers comprising at least one vinyl group (by total weight of the silicone formulation), preferably less than 1 wt.%, more preferably less than 0.1 wt.%. In a highly preferred embodiment the silicone formulation is substantially free of a vinyl substituted silane or siloxane crosslinker. Similarly, the use of phenyl silanes can be avoided, such that in preferred embodiments of the invention the silicone formulations described herein are provided comprising less than 4 wt.% silane or siloxane crosslinkers comprising at least one phenyl group (by total weight of the silicone formulation), preferably less than 1 wt.%, more preferably less than 0.1 wt.%. In a highly preferred embodiment the silicone formulation is substantially free of a phenyl substituted silane or siloxane crosslinker. Preferably, the silicone formulations described herein are provided with low vinyl substituted silane or siloxane crosslinker and low phenyl substituted silane or siloxane crosslinker.

Furthermore, according to preferred embodiments of the invention, the silicone formulations described herein are provided having one or both of the following characteristics:
- a skinning time of more than 10 minutes, preferably more than 15 minutes; and
- an early cracking end time of less than 30 minutes, preferably less than 20 minutes, more preferably less than 10 minutes, most preferably no early cracking.

In accordance with the invention, the skinning time is determined according to the following method, performed at room temperature (about 23°C) and about 50% Relative humidity:
- a 2 mm thick silicone sealant film is applied on a 400 µm PE foil;
- at regular intervals, such as every minute, the top of the film is gently touched with a finger (or other utensil, such as a wooden chopstick), the finger or utensil is removed and akin formation is judged;
- no skin formation is reflected by silicone material sticking to the finger (or other utensil) and a sharp peak of silicone material protruding from the surface following removal of the finger or utensil; and
- skin formation is reflected by no silicone material sticking to the finger (or other utensil) and absence of a sharp peak of silicone material protruding from the surface following removal of the finger or utensil.

In accordance with the invention the early cracking time is determined according to the following method, performed at room temperature (about 23°C) and about 50% Relative humidity:
- a 2 mm thick silicone sealant film is applied on a 400 µm PE foil in a width of 5 cm and 25 cm length;
- every 5 minutes the film is bended 180° around the transverse axis (i.e. the curved path following the longitudinal axis) for 5 seconds with the silicone sealant on the outside, creating a bending line;
- the distance between different bending lines is 2 cm, with the first bending line located at least 2 cm from the top or bottom edge of the film;
- the time when ruptures or cracks visible to the naked eye are first formed in the bending line is the 'early cracking start time' and the time when no additional tears or cracks appear is the 'early cracking end time'; and
- the early cracking time is the difference between the 'early cracking end time' and the 'early cracking start time'.

If no ruptures or cracks visible to the naked eye are formed in the bending line after 30 minutes of testing, the system is considered to display no early cracking.

### Compounds of formula (I)

As explained throughout the disclosure, the present inventors have found that the particular silanes comprising 5-methyl-3-heptanone oxime are useful as crosslinking agent in silicone formulations, especially silicone sealant formulations. Hence, in another aspect the present invention provides an oxime silane or siloxane crosslinker selected from silanes according to formula (I) and hydrolysis or condensation products thereof: 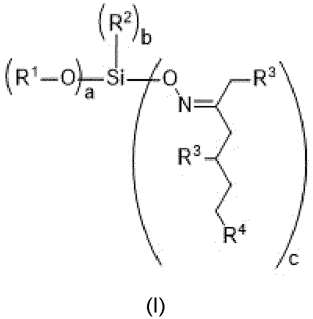 wherein:
a is 0, 1, 2 or 3
b is 0 or 1;
c is 1, 2, 3 or 4;
a+b+c is 4;
each occurrence of R¹ and R² is individually selected from the group consisting of hydrogen and optionally substituted monovalent hydrocarbon radicals having from 1 to 30 carbon atoms; and
R³ and R⁴ are such that each occurrence of R³ is methyl and R⁴ is hydrogen.

In preferred embodiments according to the invention, the oxime silane or siloxane crosslinker selected from silanes according to formula (I) and hydrolysis or condensation products thereof is provided wherein:
each occurrence of R¹ is individually selected from the group consisting of hydrogen, C₁-C₈ alkyl, C₁-C₈ haloalkyl, C₁-C₈ aminoalkyl, C₂-C₈ alkenyl, C₃-C₈ cycloalkyl, C₄-C₈ cycloalkenyl, C₆-C_{1O} aryl, -C(O)R⁵, -N=CR⁶R⁷ and -N=CR⁸;
R⁵, R⁶ and R⁷ are selected from the group consisting of C₁-C₈ alkyl, C₂-C₈ alkenyl, C₃-C₈ cycloalkyl, C₄-C₈ cycloalkenyl and C₆-C_{1O} aryl;
R⁸ is a bivalent C₂-C₈ alkyl radical such that -N=CR⁸ is a cycloalkyl; and
R² is selected from the group consisting of hydrogen, C₁-C₄ alkyl, C₂-C₄ alkenyl and phenyl.

In preferred embodiments according to the invention, the oxime silane or siloxane crosslinker selected from silanes according to formula (I) and hydrolysis or condensation products thereof is provided wherein:
a is 0;
b is 0 or 1, preferably 1;
c is 3 or 4, preferably 3;
a+b+c is 4;
R² is selected from the group consisting of hydrogen, C₁-C₄ alkyl, C₂-C₄ alkenyl and phenyl, preferably R² is selected from the group consisting of hydrogen, methyl, ethyl, vinyl and phenyl, more preferably R² is methyl; and
R³ and R⁴ are such that each occurrence of R³ is methyl and R⁴ is hydrogen.

In highly preferred embodiments according to the invention, the oxime silane or siloxane crosslinker selected from silanes according to formula (I) and hydrolysis or condensation products thereof is provided wherein:
a is 0;
b is 1;
c is 3;
a+b+c is 4;
R² is selected from the group consisting of hydrogen, C₁-C₄ alkyl, C₂-C₄ alkenyl and phenyl, preferably R² is selected from the group consisting of hydrogen, methyl, ethyl, vinyl and phenyl, more preferably R² is methyl; and
R³ and R⁴ are such that each occurrence of R³ is methyl and R⁴ is hydrogen.

Hence, in highly preferred embodiments according to the invention, the oxime silane or siloxane crosslinker selected from silanes according to formula (I) and hydrolysis or condensation products thereof, preferably selected from silanes according to formula (I) is provided wherein the silane according to formula (I) is a tris(5-methyl-3-heptanoneoxime)silane, preferably methyl tris(5-methyl-3-heptanoneoxime)silane, vinyl tris(5-methyl-3-heptanoneoxime)silane or phenyl tris(5-methyl-3-heptanoneoxime)silane, most preferably methyl tris(5-methyl-3-heptanoneoxime)silane.

In preferred embodiments according to the invention, the oxime silane or siloxane crosslinker selected from silanes according to formula (I) and hydrolysis or condensation products thereof is provided wherein:
a is 2 or 3;
b is 0 or 1;
c is 1 or 2;
a+b+c is 4;
each occurrence of R¹ is individually selected from the group consisting of C₁-C₄ alkyl, C₂-C₄ alkenyl, phenyl, -C(O)R⁵, -N=CR⁶R⁷ and -N=CR⁸;
R⁵, R⁶ and R⁷ are selected from the group consisting of C₁-C₈ alkyl, C₃-C₈ cycloalkyl and phenyl;
R⁸ is a bivalent C₅ alkyl radical such that -N=CR⁸ is cyclohexyl;
R² is selected from the group consisting of hydrogen, C₁-C₄ alkyl, C₂-C₄ alkenyl and phenyl; and
R³ and R⁴ are such that each occurrence of R³ is methyl and R⁴ is hydrogen.

In more preferred embodiments according to the invention, the oxime silane or siloxane crosslinker selected from silanes according to formula (I) and hydrolysis or condensation products thereof is provided wherein:
a is 2 or 3;
b is 0 or 1;
c is 1 or 2;
a+b+c is 4;
R² is selected from the group consisting of hydrogen, C₁-C₄ alkyl, C₂-C₄ alkenyl and phenyl;
R³ and R⁴ are such that each occurrence of R³ is methyl and R⁴ is hydrogen;
R¹ is -N=CR⁶R⁷; and
R⁶ and R⁷ are selected from the group consisting of C₁-C₈ alkyl, preferably R⁶ is methyl and R⁷ is propyl.

### Cured silicone formulation

In a further aspect of the invention, there is provided a cured silicone formulation obtainable by curing a silicone formulation as described herein, preferably by moisture-curing a silicone formulation as described herein. In a preferred embodiment of the invention there is provided a cured silicone formulation obtainable by curing a silicone formulation as described herein at a temperature within the range of 5-40°C, preferably by moisture-curing a silicone formulation as described herein at a temperature within the range of 5-40°C.

In preferred embodiments according to the invention, there is provided a cured silicone formulation as described herein which has one, two, three or four of the following characteristics:
- Elastic modulus within the range of 0.15-0.5 MPa;
- Tensile strength of 0.8-2 MPa;
- Elongation at break of 500-1500%; and
- Shore A Hardness of 8-20;
wherein the elastic modulus, tensile strength and elongation at break are determined in accordance with DIN53504 (2017-03) using a film thickness of 2 mm cured for 1 week at room temperature (23°C) and the shore A hardness is determined in accordance with ISO868 (2003) using a film thickness of 6 mm.

### Use of the silicone formulation

In a further aspect of the invention, there is provided the use of the silicone formulation as described herein, or the cured silicone formulation as described herein, as a sealant, grouting compound or adhesive, preferably as a sealant.

### Use of the silanes according to formula (I)

In a further aspect of the invention, there is provided the use of a first crosslinker selected from silanes according to formula (I) and hydrolysis or condensation products thereof as described herein, to improve early cracking behaviour and/or to increase skin formation time of a silicone formulation.

The invention also provides the use of a crosslinker selected from silanes according to formula (I) and hydrolysis or condensation products thereof as described herein, to reduce the amount of vinyl silane employed in a silicone formulation.

The invention also provides the use of a crosslinker selected from silanes according to formula (I) and hydrolysis or condensation products thereof as described herein, to reduce the carcinogenicity of a silicone formulation, preferably while maintaining or improving early cracking behaviour and/or to increase skin formation time.

The invention also provides the use of a crosslinker selected from silanes according to formula (I) and hydrolysis or condensation products thereof as described herein, to reduce the malodor caused by the curing of a silicone formulation, preferably while maintaining or improving early cracking behaviour and/or skin formation time.

In accordance with the preferred embodiments for the crosslinker described herein, the uses described herein preferably concern the use of a tris(5-methyl-3-heptanoneoxime)silane, preferably a tris(5-methyl-3-heptanoneoxime)silane selected from the group consisting of methyl tris(5-methyl-3-heptanoneoxime)silane, vinyl tris(5-methyl-3-heptanoneoxime)silane and phenyl tris(5-methyl-3-heptanoneoxime)silane, most preferably methyl tris(5-methyl-3-heptanoneoxime)silane.

### Methods for the preparation of the silicone formulation

In another aspect of the invention, there are provided methods for the preparation of the silicone formulations as described herein comprising the steps of:
(i) providing at least one hydroxy-terminated polydiorganosiloxane as described herein;
(ii) providing:
   (ii.1) a crosslinker selected from silanes according to formula (I) and hydrolysis or condensation products thereof as defined herein;
   (ii.2) optionally a silane or siloxane crosslinker selected from silanes according to formula (II) and hydrolysis or condensation products thereof as described herein;
(iii) optionally providing further ingredients; and
(iv) combining the ingredients provided in steps (i), (ii) and optionally (iii).

Combining the ingredients provided in steps (i) and (ii) may be performed by any conventional means, such as by blending, mixing or stirring, preferably under a moisture-free atmosphere. As will be understood by the skilled person, the method is not to be construed as strictly limited to these ingredients. In case the silicone formulation comprises additional ingredients (e.g. catalysts or fillers as discussed herein), step (iii) may include combining any optional further ingredients in order to obtain a silicone formulation as described herein.

The order of combining is not particularly limited. In preferred embodiments, the compounds provided in step (ii.2) are first combined, thereby forming a crosslinker preblend, which is subsequently combined with the compound provided in step (i) and any other optional further ingredients provided in step (iii).

As is illustrated in the examples, it is preferred that the ingredients provided in steps (i) and (ii) are combined before addition of optional further ingredients such as catalysts, plasticizers, adhesion promotors, etc. This method results in the so-called end-capping of the siloxane base polymer with the crosslinking agent and provides a more efficient curing of the resulting silicone formulation.

In preferred embodiments the method for the preparation of the silicone formulations as described herein further comprises a step of:
(v) packaging the silicone formulation in an airtight container, such as an aluminium foil or plastic tube.

For a proper understanding of this document and its claims, it is to be understood that the verb `to comprise' and its conjugations are used in its non-limiting sense to mean that items following the word are included, but items not specifically mentioned are not excluded. In addition, reference to an element by the indefinite article 'a' or 'an' does not exclude the possibility that more than one of the element is present, unless the context clearly requires that there be one and only one of the elements. The indefinite article 'a' or 'an' thus usually means 'at least one'.

The terms first, second, third and the like in the description and in the claims, are used for distinguishing between similar elements and not necessarily for describing a sequential or chronological order. The terms are interchangeable under appropriate circumstances and the embodiments of the disclosure can operate in other sequences than described or illustrated herein.

Furthermore, the various embodiments, although referred to as 'preferred' are to be construed as exemplary manners in which the invention may be implemented rather than as limiting the scope of the invention.

The invention will be further illustrated by means of the following examples, which are not intended to limit the scope of the invention in any way.

### Examples

A series of one-component RTV1 moisture curable silicone sealant formulations comprising different oxime crosslinkers were prepared. The effect of the oxime crosslinker on the mechanical properties, the skinning time and the early cracking behaviour of the silicone formulation was evaluated.

The elastic modulus, tensile strength and elongation at break are determined in accordance with DIN53504 (2017-03) using a film thickness of 2 mm cured for 1 week at room temperature (23°C) and the shore A hardness is determined in accordance with ISO868 (2003) using a film thickness of 6 mm. The early cracking time and the skinning time were determined according to the methods described herein earlier.

If no tears or cracks visible to the naked eye are formed in the bending line after 30 minutes of testing, the system displays no early cracking.

The sealant formulations comprise the following ingredients: hydroxyl-terminated polydimethylsiloxane (PDMS) having a dynamic viscosity at 25°C of 80000 mPa s, PDMS silicone oil having a dynamic viscosity at 25°C of 1000 mPa s, an oxime crosslinker as detailed in the following tables, hydrophilic fumed silica having a surface area of 150 m²/g (filler and thixotropic agent), aminopropyl tris methoxy silane (AMMO) (adhesion promotor) and dioctyl tin oxide (DOTO) (catalyst).

The following oxime crosslinkers and oximes were employed:
- Me(MEKO)₃Si: methyl tris(methyl ethyl ketoximo)silane = methyl tris(2-n-butanonoxime)silane
- Me(ACO)₃Si: methyl tris(acetone oximo)silane = methyl tris(2-propanonoxime)silane
- Me(2PO)₃Si: methyl tris(2-pentanone oximo)silane
- Vinyl(2PO)₃Si: vinyl tris(2-pentanone oximo)silane
- Ph(2PO)₃Si: phenyl tris(2-pentanone oximo)silane
- Me(MIBKO)₃Si: methyl tris(methyl isobutyl ketoximo)silane = methyl tris(4-methyl-2-pentanonoxime)silane
- Me(MAKO)₃Si: methyl tris(methyl amyl ketoximo)silane = methyl tris(2-heptanonoxime)silane
- Me(trem)₃Si: methyl tris(tremone oximo)silane = methyl tris(5-methyl-3-heptanonoxime)silane
- Me(MiAKO)₃Si: methyl tris(methyl iso amyl ketoximo)silane = methyl tris(5-methyl-2-hexanonoxime) silane
- MAKO: methyl amylketoneoxime = 2-heptanonoxime (free oxime).
- MEKO: methyl ethyl ketoximo = 2-butanone oxime (free oxime)

The silicone formulations were prepared with a speed mixer using the following mixing steps:
- the hydroxyl-terminated PDMS and silicon oil were combined and the blend was mixed for 30 seconds at 3000 rpm (mixture 1);
- the crosslinker (crosslinker 1) was added to mixture 1 and the blend was mixed for 30 seconds at 3000 rpm (mixture 2) and the resulting mixture 2 was stored for 10 minutes at 25 °C;
- in case a second crosslinker was included, this second crosslinker (crosslinker2) was added to mixture 2 and mixed for 30 seconds at 3000 rpm (mixture 3) and the resulting mixture 3 stored for 2 minutes at 25 °C;
- the hydrophilic fumed silica was added to mixture 2 or mixture 3 respectively and the blend was mixed for 30 seconds at 3000 rpm (mixture 4);
- the adhesion promotor (AMMO) was added to mixture 4 and the blend was mixed for 30 seconds at 3000 rpm (mixture 5);
- the catalyst (DOTO) was added to mixture 5 and the blend was mixed for 30 seconds at 3000 rpm.

As shown in the tables below (wherein examples 1-2, 9-21, 25, 27 are reference examples, not examples according to the invention) the formulations comprising Me(MAKO)₃Si or Me(trem)₃Si have an increased skinning time and show little or no cracking behaviour. It further demonstrated that a combination of Me(MAKO)₃Si and Me(2PO)₃Si, either added separately or as a preblended mixture to the silicone formulation, also results in a silicone formulation having an increased skinning time and/or showing little or no cracking behaviour and additionally has increased shore A hardness compared to Me(MAKO)₃Si alone. Additionally, it was surprisingly found that even when employed as free oxime, a mixture of Me(2PO)₃Si and MAKO results in a silicone formulation having an increased skinning time and/or showing no cracking behaviour. The Maximum tension as mentioned in the following tables is also referred to herein elsewhere as the Tensile strength.

| | Example 1 | Example 2 | Example 3 | Comparative Example 4 |
|---|---|---|---|---|
| | Me(MAKO)₃Si | Me(MAKO)₃Si | Me(trem)₃Si | Me(MiAKO)₃Si |
| OH-functional PDMS (80000 mPa·s; g) | 65 | 65 | 65 | 65 |
| PDMS (1000 mPa·s; g) | 21.5 | 21.5 | 21.5 | 21.5 |
| Crosslinker (g) | 5 | 7.1 | 5 | 5 |
| Hydrophilic fumed silica (g) | 8 | 8 | 8 | 8 |
| AMMO (g) | 0.4 | 0.4 | 0.4 | 0.4 |
| DOTO (g) | 0.3 | 0.3 | 0.3 | 0.3 |
| | | | | |
| Skinning time (min) | 18 | 18 | 23 | 13 |
| Early cracking start (min) | / | / | / | 10 |
| Early cracking end (min) | / | / | / | 35 |
| Elasticity modulus (MPa, DIN 53504) | 0.19 | 0.18 | 0.20 | 0.24 |
| Maximum tension (MPa, DIN 53504) | 1.07 | 1.05 | 1.27 | 1.53 |
| Elongation at break (%; DIN 53504) | 1200 | 1270 | 1250 | 1230 |
| Shore A | 12 | 12 | 10 | 14 |

| | Comparative example 5 | Comparative example 6 | Comparative example 7 | Comparative example 8 |
|---|---|---|---|---|
| | Me(ACO)₃Si | Me(MEKO)₃Si | Me(2PO)₃Si | Me(MIBKO)₃Si |
| OH-functional PDMS (80000 mPa·s; g) | 65 | 65 | 65 | 65 |
| PDMS (1000 mPa·s; g) | 21.5 | 21.5 | 21.5 | 21.5 |
| Crosslinker (g) | 5 | 5 | 5 | 5 |
| Hydrophilic fumed silica (g) | 8 | 8 | 8 | 8 |
| AMMO (g) | 0.4 | 0.4 | 0.4 | 0.4 |
| DOTO (g) | 0.3 | 0.3 | 0.3 | 0.3 |
| | | | | |
| Skinning time (min) | 5 | 5 | 7 | 13 |
| Early cracking start (min) | 10 | 10 | 10 | 10 |
| Early cracking end (min) | 50 | 45 | 35 | 30 |
| Elasticity modulus (MPa, DIN 53504) | 0.37 | 0.30 | 0.29 | 0.24 |
| Maximum tension (MPa, DIN 53504) | 1.52 | 1.61 | 1.65 | 1.42 |
| Elongation at break (%; DIN 53504) | 900 | 1100 | 1130 | 1210 |
| Shore A | 23 | 19 | 16 | 16 |

| | Example 9 | Example 10 | Example 11 | Example 12 |
|---|---|---|---|---|
| crosslinker 1 | Me(MAKO)₃Si | Me(MAKO)₃Si | Me(MAKO)₃Si | Me(MAKO)₃Si |
| crosslinker 2 | Me(2PO)₃Si | Me(2PO)₃Si | Me(2PO)₃Si | Me(2PO)₃Si |
| OH-functional PDMS (80000 mPa·s; g) | 65 | 65 | 65 | 65 |
| PDMS (1000 mPa·s; g) | 21.5 | 21.5 | 21.5 | 21.5 |
| Oxime crosslinker 1 (g) | 0.1 | 0.3 | 0.5 | 1 |
| Oxime crosslinker 2 (g) | 4.9 | 4.7 | 4.5 | 4 |
| Hydrophilic fumed silica (g) | 8 | 8 | 8 | 8 |
| AMMO (g) | 0.4 | 0.4 | 0.4 | 0.4 |
| DOTO (g) | 0.3 | 0.3 | 0.3 | 0.3 |
| | | | | |
| Skinning time (min) | 8 | 9 | 12 | 14 |
| Early cracking start (min) | 15 | 10 | / | / |
| Early cracking end (min) | 25 | 15 | / | / |
| Elasticity modulus (MPa, DIN 53504) | 0.25 | 0.26 | 0.27 | 0.26 |
| Maximum tension (MPa, DIN 53504) | 1.57 | 1.38 | 1.50 | 1.40 |
| Elongation at break (%; DIN 53504) | 1160 | 1150 | 1120 | 1130 |
| Shore A | 13 | 14 | 17 | 16 |

| | Example 13 | Example 14 | Example 15^{a} | Example 16^{a} |
|---|---|---|---|---|
| crosslinker 1 | Me(MAKO)₃Si | Me(MAKO)₃Si | Me(MAKO)3Si/ Me(2PO)₃Si (Ratio 10/90) | Me(MAKO)3Si/ Me(2PO)₃Si (Ratio 40/60) |
| crosslinker 2 | Me(2PO)₃Si | Me(2PO)₃Si | / | / |
| OH-functional PDMS (80000 mPa·s; g) | 65 | 65 | 65 | 65 |
| PDMS (1000 mPas; g) | 21.5 | 21.5 | 21.5 | 21.5 |
| crosslinker 1 (g) | 2 | 3 | 5 | 5 |
| crosslinker 2 (g) | 3 | 2 | / | / |
| Hydrophilic fumed silica (g) | 8 | 8 | 8 | 8 |
| AMMO (g) | 0.4 | 0.4 | 0.4 | 0.4 |
| DOTO (g) | 0.3 | 0.3 | 0.3 | 0.3 |
| | | | | |
| Skinning time (min) | 20 | 20 | 8 | 12 |
| Early cracking start (min) | / | / | 10 | / |
| Early cracking end (min) | / | / | 20 | / |
| Elasticity modulus (MPa, DIN 53504) | 0.23 | 0.23 | 0.25 | 0.23 |
| Maximum tension (MPa, DIN 53504) | 1.30 | 1.20 | 1.48 | 1.20 |
| Elongation at break (%; DIN 53504) | 1190 | 1190 | 1310 | 1170 |
| Shore A | 16 | 14 | 14 | 14 |

| | | | | |
|---|---|---|---|---|
| ^{a}The two crosslinkers are first mixed and added to the silicone formulation as a mixture (crosslinker 1). | | | | |

| | Example 17^{a} | Example 18^{a} | Example 19 ^{a} |
|---|---|---|---|
| Crosslinker 1 | Me(MAKO)₃Si/ Me(2PO)₃Si (Ratio 60/40) | Me(2PO)₃Si/ MAKO (Ratio 5/0,5 ) | Me(2PO)₃Si/ MAKO (Ratio 5/3) |
| OH-functional PDMS (80000 mPa·s; g) | 65 | 65 | 65 |
| PDMS (1000 mPa·s; g) | 21.5 | 21.5 | 21.5 |
| Crosslinker 1 (g) | 5 | 5 | 5 |
| Hydrophilic fumed silica (g) | 8 | 8 | 8 |
| AMMO (g) | 0.4 | 0.4 | 0.4 |
| DOTO (g) | 0.3 | 0.3 | 0.3 |
| | | | |
| Skinning time (min) | 18 | 8 | 14 |
| Early cracking start (min) | / | 15 | / |
| Early cracking end (min) | / | 25 | / |
| Elasticity modulus (MPa, DIN 53504) | 0.22 | 0.25 | 0.17 |
| Maximum tension (MPa, DIN 53504) | 1.20 | 1.41 | 0.99 |
| Elongation at break (%; DIN 53504) | 1170 | 1320 | 1100 |
| Shore A | 14 | 15 | 10 |

| | | | |
|---|---|---|---|
| ^{a}The two compounds are first mixed and added to the silicone formulation as a mixture (crosslinker 1). | | | |

| | Example 20 | Example 21^{a} | Comparative Example 22^{a} |
|---|---|---|---|
| crosslinker 1 | Me(MAKO)₃Si/ | Me(ACO)Si/ MAKO Ratio (5/0,5) | Me(2PO))₃Si/ MEKO (ratio 5/0.5) |
| crosslinker 2 | Me(ACO)₃Si | / | / |
| OH-functional PDMS (80000 mPa·s; g) | 65 | 65 | 65 |
| PDMS (1000 mPa·s; g) | 21.5 | 21.5 | 21.5 |
| crosslinker 1 (g) | 0.5 | 5 | 5 |
| crosslinker 2 (g) | 4.5 | / | / |
| Hydrophilic fumed silica (g) | 8 | 8 | 8 |
| AMMO (g) | 0.4 | 0.4 | 0.4 |
| DOTO (g) | 0.3 | 0.3 | 0.3 |
| | | | |
| Skinning time (min) | 3 | 7 | 6 |
| Early cracking start (min) | / | / | 10 |
| Early cracking end (min) | / | / | 50 |
| Elasticity modulus (MPa, DIN 53504) | 0.38 | 0.38 | 0.33 |
| Maximum tension (MPa, DIN 53504) | 1.16 | 1.33 | 1.44 |
| Elongation at break (%; DIN 53504) | 440 | 600 | 890 |
| Shore A | 20 | 17 | 14 |

| | | | |
|---|---|---|---|
| ^{a}The two crosslinkers are first mixed and added to the silicone formulation as a mixture (crosshnker 1). | | | |

| | Comparative Example 23 | Comparative Example 24^{a} |
|---|---|---|
| crosslinker 1 | Vinyl(2PO)₃Si | Ph(2PO)₃Si |
| OH-functional PDMS (80000 mPa·s; g) | 65 | 65 |
| PDMS (1000 mPa·s; g) | 21.5 | 21.5 |
| crosslinker 1 (g) | 5 | 5 |
| Hydrophilic fumed silica (g) | 8 | 8 |
| AMMO (g) | 0.4 | 0.4 |
| DOTO (g) | 0.3 | 0.3 |
| | | |
| Skinning time (min) | 3 | 18 |
| Early cracking start (min) | 5 | / |
| Early cracking end (min) | 10 | / |
| Elasticity modulus (MPa, DIN 53504) | 0.35 | 0.30 |
| Maximum tension (MPa, DIN 53504) | 1.45 | 1.40 |
| Elongation at break (%; DIN 53504) | 740 | 960 |
| Shore A | 19 | 16 |

| | | |
|---|---|---|
| ^{a}The silicone formulation becomes sticky after curing. | | |

| | Example 25 | Comparative Example 26 | Example 27 | Comparative Example 28 |
|---|---|---|---|---|
| crosslinker 1 | Me(MAKO))₃Si | Me(MEKO))₃Si | Me(MAKO))₃Si | Me(MEKO))₃Si |
| OH-functional PDMS (80000 mPa·s; g) | 65 | 65 | 34 | 34 |
| PDMS (1000 mPas; g) | / | / | 26 | 26 |
| Hydrocarbon plasticizer | 21.5 | 21.5 | / | / |
| crosslinker 1 (g) | 5 | 5 | 5 | 5 |
| Hydrophilic fumed silica (g) | 8 | 8 | 4.3 | 4.3 |
| Coated CaCO₃ (g) | / | / | 30 | 30 |
| AMMO (g) | 0.4 | 0.4 | 0.4 | 0.4 |
| DOTO (g) | 0.3 | 0.3 | 0.3 | 0.3 |
| | | | | |
| Skinning time (min) | 14 | 6 | 18 | 10 |
| Early cracking start (min) | 15 | 5 | 10 | 5 |
| Early cracking end (min) | 30 | 45 | 35 | 60 |
| Elasticity modulus (MPa, DIN 53504) | 0.24 | 0.40 | 0.21 | 0.30 |
| Maximum tension (MPa, DIN 53504) | 1.14 | 1.38 | 1.03 | 1.12 |
| Elongation at break (%; DIN 53504) | 880 | 610 | 1130 | 1000 |
| Shore A | 11 | 18 | 10 | 21 |

All compounds employed except Me(trem)₃Si are commercially available and were obtained from various chemical suppliers.

Me(trem)₃Si was synthesized as follows: A two liter, three-necked, round bottomed flask, fitted with a thermometer, overhead stirrer and addition funnel was charged with 436.8 g (3.05 mol) of 5-Methyl-3-heptanone oxime and 1000 ml of hexane. While stirring the contents in the flask, 74.5 g (0.5 mol) of methyltrichlorosilane was added dropwise from the addition funnel over a period of 30 minutes. During the addition, the reaction temperature was maintained at 35-41 ° C. After the addition was complete, the reaction mixture was allowed to stand for 10 minutes. The top phase containing hexane and the product was separated from the heavy 5-Methyl-3-heptanone oxime hydrochloride bottom phase using a separator funnel. The top phase was neutralized with ammonia gas by bubbling the ammonia through the liquid for 10 minutes. Solid ammonium chloride was filtered off and hexane was removed from the filtrate by distillation under reduced pressure to give 214.9 g (91.5%) of a colourless liquid.

## Claims

1. A silicone formulation comprising a hydroxy-terminated polydiorganosiloxane and a first crosslinker selected from silanes according to formula (I) and hydrolysis or condensation products thereof: 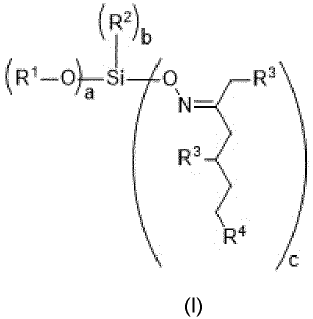 wherein
a is 0, 1, 2 or 3
b is 0 or 1;
c is 1, 2, 3 or 4;
a+b+c is 4;
each occurrence of R¹ and R² is individually selected from the group consisting of hydrogen and optionally substituted monovalent hydrocarbon radicals having from 1 to 30 carbon atoms; and
R³ and R⁴ are such that each occurrence of R³ is methyl and R⁴ is hydrogen.

2. The silicone formulation according to claim 1, further comprising a catalyst, preferably an organometal catalyst which is present in an amount of 0.01-10 wt.% (by total weight of the silicone formulation).

3. The silicone formulation according to claim 1 or 2, wherein
each occurrence of R¹ is individually selected from the group consisting of hydrogen, C₁-C₈ alkyl, C₁-C₈ haloalkyl, C₁-C₈ aminoalkyl, C₂-C₈ alkenyl, C₃-C₈ cycloalkyl, C₄-C₈ cycloalkenyl, C₆-C_{1O} aryl, -C(O)R⁵, -N=CR⁶R⁷ and -N=CR⁸;
R⁵, R⁶ and R⁷ are selected from the group consisting of C₁-C₈ alkyl, C₂-C₈ alkenyl, C₃-C₈ cycloalkyl, C₄-C₈ cycloalkenyl and C₆-C_{1O} aryl;
R⁸ is a bivalent C₂-C₈ alkyl radical such that -N=CR⁸ is a cycloalkyl; and
R² is selected from the group consisting of hydrogen, C₁-C₄ alkyl, C₂-C₄ alkenyl and phenyl.

4. The silicone formulation according to claim 3 wherein
a is 0;
b is 0 or 1, preferably 1;
c is 3 or 4, preferably 3;
a+b+c is 4; and
R² is selected from the group consisting of hydrogen, C₁-C₄ alkyl, C₂-C₄ alkenyl and phenyl, preferably R² is selected from the group consisting of hydrogen, methyl, ethyl, vinyl and phenyl, more preferably R² is methyl.

5. The silicone formulation according to any one of claims 1-4, preferably according to claim 4, comprising a second silane or siloxane crosslinker selected from silanes according to formula (II) and hydrolysis or condensation products thereof 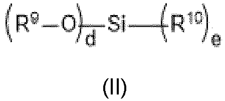 wherein:
d is 3 or 4, preferably 3;
e is 1 or 0, preferably 1;
d+e is 4;
each occurrence of R⁹ is individually selected from the group consisting of hydrogen and optionally substituted monovalent hydrocarbon radicals having from 1 to 30 carbon atoms,
preferably each occurrence of R⁹ is individually selected from the group consisting of hydrogen, C₁-C₈ alkyl, C₁-C₈ haloalkyl, C₁-C₈ aminoalkyl, C₂-C₈ alkenyl, C₃-C₈ cycloalkyl, C₄-C₈ cycloalkenyl, C₆-C₁₀ aryl, -C(O)R¹¹, -N=CR¹²R¹³ and -N=CR¹⁴, more preferably each occurrence of R⁹ is individually selected from the group consisting of C₁-C₄ alkyl, C₂-C₄ alkenyl, phenyl, -C(O)R¹¹, -N=CR¹²R¹³ and -N=CR¹⁴, most preferably R⁹ is N=CR¹²R¹³;
R¹¹, R¹² and R¹³ are selected from the group consisting of C₁-C₈ alkyl, C₂-C₈ alkenyl, C₃-C₈ cycloalkyl, C₄-C₈ cycloalkenyl, and C₆-C_{1O} aryl, preferably R¹¹, R¹² and R¹³ are selected from the group consisting of C₁-C₄ alkyl, most preferably R¹¹ and R¹² are methyl and R¹³ is propyl;
R¹⁴ is a bivalent C₂-C₈ alkyl radical such that -N=CR¹⁴ is a cycloalkyl; and
R¹⁰ is selected from the group consisting of hydrogen and optionally substituted monovalent hydrocarbon radicals having from 1 to 30 carbon atoms, preferably R¹⁰ is selected from the group consisting of hydrogen, methyl, ethyl, vinyl and phenyl, more preferably R¹⁰ is methyl, and
wherein the second silane or siloxane crosslinker selected from silanes according to formula (II) and hydrolysis or condensation products thereof is different from the first crosslinker selected from silanes according to formula (I) and hydrolysis or condensation products thereof.

6. The silicone formulation according to claim 5, wherein the weight ratio of the second crosslinker to the first crosslinker is in the range of 0.5 to 20, preferably in the range of 2 to 15, more preferably within the range of 6 to 12, most preferably within the range of 8 to 10; and wherein the total amount of silane or siloxane crosslinkers is within the range of 2-8 wt.% (by total weight of the silicone formulation), preferably within the range of 4-6 wt.%, most preferably within the range of 4.5-5.5 wt.%.

7. The silicone formulation according to any one of claims 1-6, wherein the hydroxy-terminated polydiorganosiloxane is at least partially end-capped with the first crosslinker.

8. The silicone formulation according to any one of claims 1-7, further comprising of 1-60 wt.% (by total weight of the silicone formulation), preferably within the range of 3-50 wt.%, more preferably within the range of 5-30 wt.% of a filler selected from the group consisting of mineral fillers, metal oxide fillers, fly ash, bottom ash, carbon black, and combinations thereof, preferably selected from the group consisting of: calcium hydroxide; natural, ground or precipitated calcium carbonates; dolomites; fumed silica; carbon black; calcined kaolins; boehmite; clay; talc aluminium silicates; magnesium aluminium silicates; zirconium silicates; finely ground quartz; finely ground cristobalite; diatomaceous earth; mica; iron oxides; titanium oxides; zirconium oxide, more preferably selected from the group consisting of dolomite and fumed silica.

9. The silicone formulation according to any one of claims 1-8, having one or both of the following characteristics:
• a skinning time of more than 10 minutes, preferably more than 15 minutes, as determined using the method as defined in the detailed description; and
• an early cracking end time of less than 30 minutes, preferably less than 20 minutes, more preferably less than 10 minutes, most preferably no early cracking, as determined using the method as defined in the detailed description.

10. A cured silicone elastomer obtainable by curing the silicone formulation according to any one of claims 1-9, preferably obtainable by moisture-curing the silicone formulation according to any one of claims 1-9.

11. Use of the silicone formulation according to any one of claims 1-9, or cured silicone elastomer according to claim 10, as a sealant, grouting compound or adhesive, preferably as a sealant.

12. Use of a first crosslinker selected from silanes according to formula (I) and hydrolysis or condensation products thereof as defined in any one of claims 1, 3 and 4, preferably a crosslinker selected from silanes according to formula (I) and hydrolysis or condensation products thereof as defined in claim 4, to
• improve early cracking behaviour of a silicone formulation; and/or
• increase skin formation time of a silicone formulation; and/or
• reduce the amount of vinyl silane employed in a silicone formulation; and/or
• reduce the carcinogenicity of a silicone formulation, preferably while maintaining or improving early cracking behaviour and/or skin formation time; and/or
• to reduce the malodor caused by the curing of a silicone formulation, preferably while maintaining or improving early cracking behaviour and/or skin formation time.

13. A method for the preparation of a silicone formulation according to any one of claims 1-9, comprising the steps of:
(i) providing at least one hydroxy-terminated polydiorganosiloxane;
(ii) providing:
(ii.1) a first crosslinker selected from silanes according to formula (I) and hydrolysis or condensation products thereof as defined in any one of claims 1, 3 and 4, preferably a crosslinker selected from silanes according to formula (I) and hydrolysis or condensation products thereof as defined in claim 4; and
(ii.2) optionally asecond silane or siloxane crosslinker selected from silanes according to formula (II) and hydrolysis or condensation products thereof as described in claim 5;
(iii) optionally providing further ingredients; and
(iv) combining the ingredients provided in steps (i), (ii) and optionally (iii).

14. An oxime silane or siloxane crosslinker selected from silanes according to formula (I) and hydrolysis or condensation products thereof as defined in claim 1.

15. The oxime silane or siloxane crosslinker according to claim 14 wherein the silane according to formula (I) is a tris(5-methyl-3-heptanoneoxime)silane, preferably methyl tris(5-methyl-3-heptanoneoxime)silane, vinyl tris(5-methyl-3-heptanoneoxime)silane or phenyl tris(5-methyl-3-heptanoneoxime)silane, most preferably methyl tris(5-methyl-3-heptanoneoxime)silane.

## Patentansprüche

1. Silikonformulierung umfassend ein hydroxyterminiertes Polydiorganosiloxan und einen ersten Vernetzer, ausgewählt aus Silanen gemäß Formel (I) und deren Hydrolyse- oder Kondensationsprodukten: 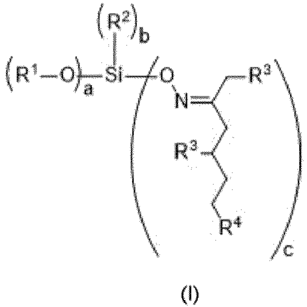 wobei
a 0, 1, 2 oder 3 ist
b 0 oder 1 ist;
c 1, 2, 3 oder 4 ist;
a+b+c 4 ist;
jedes Vorkommen von R¹ und R² einzeln ausgewählt ist aus der Gruppe bestehend aus Wasserstoff und optional substituierten monovalenten Kohlenwasserstoffresten mit 1 bis 30 Kohlenstoffatomen; und
R³ und R⁴ so beschaffen sind, dass jedes Vorkommen von R³ Methyl ist und R⁴ Wasserstoff ist.

2. Silikonformulierung nach Anspruch 1, weiter umfassend einen Katalysator, vorzugsweise einen metallorganischen Katalysator, der in einer Menge von 0,01-10 Gew.-% (bezogen auf das Gesamtgewicht der Silikonformulierung) vorhanden ist.

3. Silikonformulierung nach Anspruch 1 oder 2, wobei
jedes Vorkommen von R¹ einzeln ausgewählt ist aus der Gruppe bestehend aus Wasserstoff, C₁-C₈-Alkyl, C₁-C₈-Halogenalkyl, C₁-C₈-Aminoalkyl, C₂-C₈-Alkenyl, C₃-C₈-Cycloalkyl, C₄-C₈-Cycloalkenyl, C₆-C₁₀-Aryl, -C(O)R⁵, -N=CR⁶R⁷ und -N=CR⁸;
R⁵, R⁶ und R⁷ ausgewählt sind aus der Gruppe bestehend aus C₁-C₈-Alkyl, C₂-C₈-Alkenyl, C₃-C₈-Cycloalkyl, C₄-C₈-Cycloalkenyl und C₆-C₁₀-Aryl;
R⁸ ein bivalenter C₂-C₈-Alkylrest ist, so dass -N=CR⁸ ein Cycloalkyl ist; und
R² ausgewählt ist aus der Gruppe bestehend aus Wasserstoff, C₁-C₄-Alkyl, C₂-C₄-Alkenyl und Phenyl.

4. Silikonformulierung nach Anspruch 3, wobei
a 0 ist;
b 0 oder 1 ist, vorzugsweise 1;
c 3 oder 4 ist, vorzugsweise 3;
a+b+c 4 ist; und
R² ausgewählt ist aus der Gruppe bestehend aus Wasserstoff, C₁-C₄-Alkyl, C₂-C₄-Alkenyl und Phenyl, vorzugsweise ist R² ausgewählt aus der Gruppe bestehend aus Wasserstoff, Methyl, Ethyl, Vinyl und Phenyl, besonders bevorzugt ist R² Methyl.

5. Silikonformulierung nach einem der Ansprüche 1-4, vorzugsweise nach Anspruch 4, umfassend einen zweiten Silan- oder Siloxanvernetzer, ausgewählt aus Silanen gemäß Formel (II) und deren Hydrolyse- oder Kondensationsprodukten 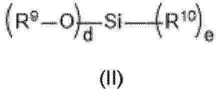 wobei:
d 3 oder 4 ist, vorzugsweise 3;
e 1 oder 0 ist, vorzugsweise 1;
d+e 4 ist;
jedes Vorkommen von R⁹ einzeln ausgewählt ist aus der Gruppe bestehend aus Wasserstoff und optional substituierten monovalenten Kohlenwasserstoff-resten mit 1 bis 30 Kohlenstoffatomen,
vorzugsweise jedes Vorkommen von R⁹ einzeln ausgewählt ist aus der Gruppe bestehend aus Wasserstoff, C₁-C₈-Alkyl, C₁-C₈-Halogenalkyl, C₁-C₈-Aminoalkyl, C₂-C₈-Alkenyl, C₃-C₈-Cycloalkyl, C₄-C₈-Cycloalkenyl, C₆-C₁₀-Aryl, -C(O)R¹¹,
-N=CR¹²R¹³ und -N=CR¹⁴, bevorzugter ist jedes Vorkommen von R⁹ einzeln ausgewählt aus der Gruppe bestehend aus C₁-C₄-Alkyl, C₂-C₄-Alkenyl, Phenyl, -C(O)R¹¹, -N=CR¹²R¹³ und -N=CR¹⁴, am meisten bevorzugt ist R⁹ -N=CR¹²R¹³;
R¹¹, R¹² und R¹³ ausgewählt sind aus der Gruppe bestehend aus C₁-C₈-Alkyl, C₂-C₈-Alkenyl, C₃-C₈-Cycloalkyl, C₄-C₈-Cycloalkenyl und C₆-C₁₀-Aryl, vorzugsweise sind R¹¹, R¹² und R¹³ ausgewählt aus der Gruppe bestehend aus C₁-C₄-Alkyl, am meisten bevorzugt sind R¹¹ und R¹² Methyl und R¹³ ist Propyl;
R¹⁴ ein bivalenter C₂-C₈-Alkylrest ist, so dass -N=CR¹⁴ ein Cycloalkyl ist; und
R¹⁰ ausgewählt ist aus der Gruppe bestehend aus Wasserstoff und optional substituierten monovalenten Kohlenwasserstoffresten mit 1 bis 30 Kohlenstoffatomen, vorzugsweise ist R¹⁰ ausgewählt aus der Gruppe bestehend aus Wasserstoff, Methyl, Ethyl, Vinyl und Phenyl, besonders bevorzugt ist R¹⁰ Methyl, und
wobei der zweite Silan- oder Siloxanvernetzer, der ausgewählt ist aus Silanen gemäß Formel (II) und deren Hydrolyse- oder Kondensationsprodukten, sich von dem ersten Vernetzer, der ausgewählt ist aus Silanen gemäß Formel (I) und deren Hydrolyse- oder Kondensationsprodukten, unterscheidet.

6. Silikonformulierung nach Anspruch 5, wobei das Gewichtsverhältnis des zweiten Vernetzers zu dem ersten Vernetzer im Bereich von 0,5 bis 20, vorzugsweise im Bereich von 2 bis 15, besonders bevorzugt im Bereich von 6 bis 12, am meisten bevorzugt im Bereich von 8 bis 10 liegt; und wobei die Gesamtmenge der Silan- oder Siloxanvernetzer im Bereich von 2 bis 8 Gew.-% (bezogen auf das Gesamtgewicht der Silikonformulierung), vorzugsweise im Bereich von 4 bis 6 Gew.-%, am meisten bevorzugt im Bereich von 4,5 bis 5,5 Gew.-% liegt.

7. Silikonformulierung nach einem der Ansprüche 1-6, wobei das hydroxyterminierte Polydiorganosiloxan zumindest teilweise mit dem ersten Vernetzer endverkappt ist.

8. Silikonformulierung nach einem der Ansprüche 1-7, weiter umfassend 1-60 Gew.-% (bezogen auf das Gesamtgewicht der Silikonformulierung), vorzugsweise im Bereich von 3-50 Gew.-%, noch bevorzugter im Bereich von 5-30 Gew.-% eines Füllstoffs, der aus der Gruppe ausgewählt ist, die aus mineralischen Füllstoffen, Metalloxidfüllstoffen, Flugasche, Bodenasche, Ruß und Kombinationen davon besteht, vorzugsweise ausgewählt aus der Gruppe bestehend aus: Kalziumhydroxid; natürlichen, gemahlenen oder gefällten Kalziumkarbonaten; Dolomiten; pyrogener Kieselsäure; Ruß; kalzinierten Kaolinen; Böhmit; Ton; Talk-Aluminium-Silikaten; Magnesium-Aluminium-Silikaten; Zirkonium-Silikaten; fein gemahlenem Quarz; fein gemahlenem Cristobalit; Kieselgur; Glimmer; Eisenoxiden; Titanoxiden; Zirkoniumoxiden, besonders bevorzugt ausgewählt aus der Gruppe bestehend aus Dolomit und pyrogener Kieselsäure.

9. Silikonformulierung nach einem der Ansprüche 1-8, die eine oder beide der folgenden Eigenschaften aufweist:
• eine Hautbildungszeit von mehr als 10 Minuten, vorzugsweise mehr als 15 Minuten, wie bestimmt nach der in der ausführlichen Beschreibung beschriebenen Methode; und
• eine Frühriss-Endzeit von weniger als 30 Minuten, vorzugsweise weniger als 20 Minuten, bevorzugter weniger als 10 Minuten, am meisten bevorzugt keine frühe Rissbildung, wie bestimmt nach der in der ausführlichen Beschreibung beschriebenen Methode.

10. Gehärtetes Silikonelastomer, erhältlich durch Härten der Silikonformulierung nach einem der Ansprüche 1-9, vorzugsweise erhältlich durch Feuchtigkeitshärtung der Silikonformulierung nach einem der Ansprüche 1-9.

11. Verwendung der Silikonformulierung nach einem der Ansprüche 1-9 oder des gehärteten Silikonelastomers nach Anspruch 10 als Dichtstoff, Fugenmasse oder Klebstoff, vorzugsweise als Dichtstoff.

12. Verwendung eines ersten Vernetzers, ausgewählt aus Silanen gemäß Formel (I) und deren Hydrolyse- oder Kondensationsprodukten nach einem der Ansprüche 1, 3 und 4, vorzugsweise eines Vernetzers, ausgewählt aus Silanen der Formel (I) und deren Hydrolyse- oder Kondensationsprodukten, wie in Anspruch 4 definiert, um
• das Frührissverhalten einer Silikonformulierung zu verbessern; und/oder
• die Hautbildungszeit einer Silikonformulierung zu erhöhen; und/oder
• die Menge des in einer Silikonformulierung eingesetzten Vinylsilans zu verringern; und/oder
• die Karzinogenität einer Silikonformulierung zu verringern, vorzugsweise unter Beibehaltung oder Verbesserung des Frührissverhaltens und/oder der Hautbildungszeit; und/oder
• den durch die Aushärtung einer Silikonformulierung verursachten üblen Geruch zu reduzieren, vorzugsweise unter Beibehaltung oder Verbesserung des Frührissverhaltens und/oder der Hautbildungszeit.

13. Verfahren zur Herstellung einer Silikonformulierung nach einem der Ansprüche 1-9, umfassend die folgenden Schritte:
(i) Bereitstellen mindestens eines hydroxyterminierten Polydiorganosiloxans;
(ii) Bereitstellen:
(ii.1) eines ersten Vernetzers, ausgewählt aus Silanen der Formel (I) und deren Hydrolyse- oder Kondensationsprodukten, wie in einem der Ansprüche 1, 3 und 4 definiert, vorzugsweise eines Vernetzers ausgewählt aus Silanen gemäß Formel (I) und deren Hydrolyse- oder Kondensationsprodukten, wie in Anspruch 4 definiert; und
(ii.2) optional eines zweiten Silan- oder Siloxanvernetzers, ausgewählt aus Silanen gemäß Formel (II) und deren Hydrolyse- oder Kondensationsprodukten, wie in Anspruch 5 beschrieben;
(iii) optional Bereitstellen weiterer Inhaltsstoffe; und
(iv) Kombinieren der in den Schritten (i), (ii) und optional (iii) bereitgestellten Inhaltsstoffe.

14. Oximsilan oder Siloxan-Vernetzer, ausgewählt aus Silanen der Formel (I) und deren Hydrolyse- oder Kondensationsprodukten, wie in Anspruch 1 definiert.

15. Oximsilan oder Siloxan-Vernetzer nach Anspruch 14, wobei das Silan nach Formel (I) ein Tris(5-methyl-3-heptanonoxim)silan ist, vorzugsweise Methyltris(5-methyl-3-heptanonoxim)silan, Vinyltris(5-methyl-3-heptanonoxim)silan oder Phenyltris(5-methyl-3-heptanonoxim)silan, am meisten bevorzugt Methyltris(5-methyl-3-heptanonoxim)silan.

## Revendications

1. Formulation de silicone comprenant un polydiorganosiloxane à terminaison hydroxy et un premier agent de réticulation choisi parmi des silanes selon la formule (I) et leurs produits d'hydrolyse ou de condensation : 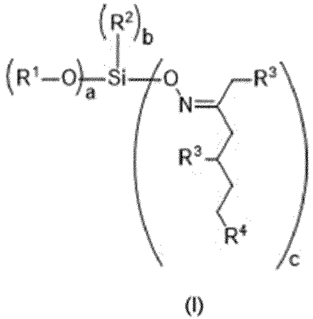
dans laquelle
a est 0, 1, 2 ou 3 ;
b est 0 ou 1 ;
c est 1, 2, 3 ou 4 ;
a+b+c est 4 ;
chaque occurrence de R¹ et R² est choisie individuellement dans le groupe consistant en de l'hydrogène et des radicaux hydrocarbonés monovalents facultativement substitués présentant de 1 à 30 atomes de carbone ; et
R³ et R⁴ sont tels que chaque occurrence de R³ est du méthyle et de R⁴ est de l'hydrogène.

2. Formulation de silicone selon la revendication 1, comprenant en outre un catalyseur, de préférence un catalyseur organométallique qui est présent en une quantité de 0, 0 1 à 10 % en poids (en poids total de la formulation de silicone).

3. Formulation de silicone selon la revendication 1 ou 2, dans laquelle
chaque occurrence de R¹ est individuellement choisie dans le groupe consistant en hydrogène, alkyle en C₁-C₈, haloalkyle en C₁-C₈, aminoalkyle en C₁-C₈, alcényle en C₂-C₈, cycloalkyle en C₃-C₈, cycloalcényle en C₄-C₈, aryle en C₆-C₁₀, -C(O)R⁵, -N=CR⁶R⁷ et -N=CR⁸ ;
R⁵, R⁶ et R⁷ sont choisis dans le groupe consistant en alkyle en C₁-C₈, alcényle en C₂-C₈, cycloalkyle en C₃-C₈, cycloalcényle en C₄-C₈ et aryle en C₆-C₁₀ ;
R⁸ est un radical alkyle bivalent en C₂-C₈ tel que -N=CR⁸ est un cycloalkyle ; et
R² est choisi dans le groupe consistant en hydrogène, alkyle en C₁-C₄, alcényle en C₂-C₄ et phényle.

4. Formulation de silicone selon la revendication 3, dans laquelle
a est 0 ;
b est 0 ou 1, de préférence 1 ;
c est 3 ou 4, de préférence 3 ;
a+b+c est 4 ; et
R² est choisi dans le groupe consistant en hydrogène, alkyle en C₁-C₄, alcényle en C₂-C₄ et phényle,
de préférence R² est choisi dans le groupe consistant en hydrogène, méthyle, éthyle, vinyle et phényle, plus préférablement R² est méthyle.

5. Formulation de silicone selon l'une quelconque des revendications 1 à 4, de préférence selon la revendication 4, comprenant un second agent de réticulation silane ou siloxane choisi parmi des silanes de formule (II) et leurs produits d'hydrolyse ou de condensation 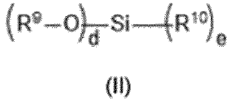 dans laquelle :
d est 3 ou 4, de préférence 3 ;
e est 1 ou 0, de préférence 1 ;
d+e est 4 ;
chaque occurrence de R⁹ est individuellement choisie dans le groupe consistant en de l'hydrogène et des radicaux hydrocarbonés monovalents facultativement substitués présentant de 1 à 30 atomes de carbone,
de préférence, chaque occurrence de R⁹ est choisie individuellement dans le groupe consistant en hydrogène, alkyle en C₁-C₈, haloalkyle en C₁-C₈, aminoalkyle en C₁-C₈, alcényle en C₂-C₈, cycloalkyle en C₃-C₈, cycloalcényle en C₄-C₈, aryle en C₆-C₁₀, -C(O)R¹¹, -N=CR¹²-R¹³ et -N=CR¹⁴, de manière plus préférée, chaque occurrence de R⁹ est individuellement choisie dans le groupe consistant en alkyle en C₁-C₄, alcényle en C₂-C₄, phényle, -C(O)R¹¹, -N=CR¹²-R¹³ et -N=CR¹⁴, de la manière la plus préférée, R⁹ est N=CR¹²R¹³ ;
R¹¹, R¹² et R¹³ sont choisis dans le groupe consistant en alkyle en C₁-C₈, alcényle en C₂-C₈, cycloalkyle en C₃-C₈, cycloalcényle en C₄-C₈ et aryle en C₆-C₁₀, de préférence R¹¹, R¹² et R¹³ sont choisis dans le groupe consistant en alkyle en C₁-C₄, de la manière la plus préférée R¹¹ et R¹² sont méthyle et R¹³ est propyle ;
R¹⁴ est un radical alkyle bivalent en C₂-C₈ tel que -N=CR¹⁴ est un cycloalkyle ; et
R¹⁰ est choisi dans le groupe consistant en de l'hydrogène et des radicaux hydrocarbonés monovalents facultativement substitués présentant de 1 à 30 atomes de carbone, de préférence R¹⁰ est choisi dans le groupe consistant en hydrogène, méthyle, éthyle, vinyle et un phényle, de manière plus préférée R¹⁰ est un méthyle, et
dans lequel le second agent de réticulation silane ou siloxane choisi parmi des silanes selon la formule (II) et leurs produits d'hydrolyse ou de condensation est différent du premier agent de réticulation choisi parmi des silanes selon la formule (I) et leurs produits d'hydrolyse ou de condensation.

6. Formulation de silicone selon la revendication 5, dans laquelle le rapport pondéral du second agent de réticulation au premier agent de réticulation est dans la plage de 0,5 à 20, de préférence dans la plage de 2 à 15, de manière plus préférée dans la plage de 6 à 12, de la manière la plus préférée dans la plage de 8 à 10 ; et dans laquelle la quantité totale d'agents de réticulation silane ou siloxane est dans la plage de 2 à 8 % en poids (en poids total de la formulation de silicone), de préférence dans la plage de 4 à 6 % en poids, de la manière la plus préférée dans la plage de 4,5 à 5,5 % en poids.

7. Formulation de silicone selon l'une quelconque des revendications 1 à 6, dans laquelle le polydiorganosiloxane à terminaison hydroxy est au moins partiellement coiffé en extrémité avec le premier agent de réticulation.

8. Formulation de silicone selon l'une quelconque des revendications 1 à 7, comprenant en outre de 1 à 60 % en poids (en poids total de la formulation de silicone), de préférence dans la plage de 3 à 50 % en poids, plus préférablement dans la plage de 5 à 30 % en poids d'une charge choisie dans le groupe constitué de charges minérales, de charges d'oxyde métallique, de cendres volantes, de cendres de fond, de noir de carbone, et de combinaisons de ceux-ci, de préférence choisie dans le groupe constitué de : hydroxyde de calcium ; carbonates de calcium naturels, broyés ou précipités ; dolomites ; silice fumée ; noir de carbone ; kaolins calcinés ; boehmite ; argile ; silicates d'aluminium de talc ; silicates d'aluminium de magnésium ; silicates de zirconium ; quartz finement broyé ; cristobalite finement broyée ; terre de diatomées ; mica ; oxydes de fer ; oxydes de titane ; oxyde de zirconium, plus préférablement choisi dans le groupe constitué de dolomite et de silice fumée.

9. Formulation de silicone selon l'une quelconque des revendications 1 à 8, présentant l'une ou les deux caractéristiques suivantes :
• un temps de dépouillement de plus de 10 minutes, de préférence de plus de 15 minutes, tel que déterminé à l'aide de la méthode telle que définie dans la description détaillée ; et
• un temps de fin de fissuration précoce inférieur à 30 minutes, de préférence inférieur à 20 minutes, de manière plus préférée inférieur à 10 minutes, de la manière plus préférée pas de fissuration précoce, tel que déterminé à l'aide du procédé telle que définie dans la description détaillée.

10. Elastomère de silicone durci pouvant être obtenu par durcissement de la formulation de silicone selon l'une quelconque des revendications 1 à 9, pouvant de préférence être obtenu par durcissement à l'humidité de la formulation de silicone selon l'une quelconque des revendications 1 à 9.

11. Utilisation de la formulation de silicone selon l'une quelconque des revendications 1 à 9, ou de l'élastomère de silicone durci selon la revendication 10, en tant qu'agent d'étanchéité, composé de scellement ou adhésif, de préférence en tant qu'agent d'étanchéité.

12. Utilisation d'un premier agent de réticulation choisi parmi les silanes selon la formule (I) et leurs produits d'hydrolyse ou de condensation tels que définis dans l'une quelconque des revendications 1, 3 et 4, de préférence un agent de réticulation choisi parmi des silanes selon la formule (I) et leurs produits d'hydrolyse ou de condensation tels que définis dans la revendication 4, pour
• améliorer le comportement de fissuration précoce d'une formulation de silicone ; et/ou
• augmenter le temps de formation de la peau d'une formulation de silicone ; et/ou
• réduire la quantité de vinylsilane utilisée dans une formulation de silicone ; et/ou
• réduire la cancérogénicité d'une formulation de silicone, de préférence tout en maintenant ou en améliorant le comportement de fissuration précoce et/ou le temps de formation de peau ; et/ou
• pour réduire les mauvaises odeurs causées par le durcissement d'une formulation de silicone, de préférence tout en maintenant ou en améliorant le comportement de fissuration précoce et/ou le temps de formation de peau.

13. Procédé de préparation d'une formulation de silicone selon l'une quelconque des revendications 1 à 9, comprenant les étapes consistant à :
(i) fournir au moins un polydiorganosiloxane à terminaison hydroxy ;
(ii) fournir :
(ii.1) un premier agent de réticulation choisi parmi des silanes selon la formule (I) et leurs produits d'hydrolyse ou de condensation tels que définis dans l'une quelconque des revendications 1, 3 et 4, de préférence un agent de réticulation choisi parmi des silanes selon la formule (I) et leurs produits d'hydrolyse ou de condensation tels que définis dans la revendication 4 ; et
(ii.2) facultativement un second agent de réticulation silane ou siloxane choisi parmi des silanes selon la formule (II) et leurs produits d'hydrolyse ou de condensation tels que décrits dans la revendication 5 ;
(iii) fournir facultativement des ingrédients supplémentaires ; et
(iv) combiner les ingrédients fournis aux étapes (i), (ii) et facultativement (iii).

14. Agent de réticulation d'oxime silane ou siloxane choisi parmi des silanes selon la formule (I) et leurs produits d'hydrolyse ou de condensation tels que définis dans la revendication 1.

15. Agent de réticulation d'oxime silane ou siloxane selon la revendication 14, dans lequel le silane selon la formule (I) est un tris(5-méthyl-3-heptanoneoxime)silane, de préférence le tris(5-méthyl-3-heptanoneoxime)silane de méthyle, le tris(5-méthyl-3-heptanoneoxime)silane de vinyle ou le tris(5-méthyl-3-heptanoneoxime)silane de phényle, le plus préférablement le tris(5-méthyl-3-heptanoneoxime)silane de méthyle.
